# EUROPEAN PATENT APPLICATION

(11) **EP 3 779 836 A1**
(43) Date of publication of application: **17.02.2021**
(21) Application number: 19777248.6
(22) Date of filing: 07.03.2019
(51) Int. Cl.: G06Q 30/02, G06F 16/00

(54) **DEVICE, METHOD AND PROGRAM FOR MAKING RECOMMENDATIONS ON THE BASIS OF CUSTOMER ATTRIBUTE INFORMATION**

(30) Priority: 27.03.2018 JP 2018059215; 27.03.2018 JP 2018059214
(71) Applicant: Culture Convenience Club Co., Ltd., Hirakata-shi, Osaka, 573-0032 (JP)
(72) Inventor: MASUDA, Muneaki, Hirakata-shi, Osaka 573-0032 (JP)
(74) Representative: Michalski Hüttermann & Partner Patentanwälte mbB
(86) International application number: PCT/JP2019/009186
(87) International publication number: WO 2019/188102

(57) **Abstract**

Provided is a device comprising an attribute database connecting section connected to an attribute database for storing a plurality of attribute values corresponding to a plurality of attributes, for each of a plurality of target people; a recommendation determining section that, for a first target person, determines whether to recommend at least one of a product and a service, based on at least one of the plurality of attribute values; a recommendation method determining section that determines a recommendation method for recommending a product or the like to the first target person; a recommendation result acquiring section that acquires a recommendation result for the first target person; a recommendation result storage section that stores the recommendation result in association with at least some attributes; and a recommendation model generating section that generates a recommendation model for selecting the recommendation method, using the attribute database.

## Description

### BACKGROUND

### 1. TECHNICAL FIELD

The present invention relates to a device, method, and program for making recommendations based on customer attribute information.

### 2. RELATED ART

A conventional system is known for collecting and analyzing customer data, as shown in Patent Document 1, for example. The data analyzed by such a system is used to make recommendations to customers, perform market research, and the like. Patent Document 1: Japanese Patent Application Publication No. 2015-76076

### [TECHNICAL PROBLEM]

In recent years, expectations for analyzing customer data to be utilized for recommending products and/or services have been increasing, and there is a desire to further increase the effect of recommendations.

### [GENERAL DISCLOSURE]

According to a first aspect of the present invention, provided is a device. The device may comprise an attribute database connecting section connected to an attribute database for storing a plurality of attribute values corresponding to a plurality of attributes, for each of a plurality of target people. The device may comprise a recommendation determining section that, for a first target person among the plurality of target people, determines whether to recommend at least one of a product and a service, based on at least one of the plurality of attribute values. The device may comprise a recommendation method determining section that determines a recommendation method for recommending at least one of a product and a service to the first target person. The device may comprise a recommendation result acquiring section that acquires a recommendation result of the recommendation method for the first target person. The device may comprise a recommendation result storage section that stores the recommendation result of the recommendation method in association with at least some attributes among the plurality of attributes in the attribute database. The device may comprise a recommendation model generating section that generates a recommendation model for selecting the recommendation method, using the attribute database that includes the recommendation result of the recommendation method as an attribute value of the at least some of the attributes.

The recommendation method determining section may determine a recommendation method for recommending at least one of a product and a service to a second target person, using the recommendation model.

The recommendation method determining section may determine recommendation methods that are different from each other for each portion of a plurality of first target people, each first target person being the first target person.

The recommendation method determining section may determine, as the recommendation method for the first target person, using at least one of electronic mail, an internet advertisement, direct mail, printing onto a receipt issued to the first target person, and a television advertisement.

The recommendation method determining section may determine, as the recommendation method for the first target person, providing an incentive that is at least one of a discount for at least one of a product and a service, an accompanying coupon, and accompanying points.

The device may comprise an environment information acquiring section that acquires environment information indicating an environment in which the second target person is located. The device may comprise a group selecting section that selects a group to be recommended from among a plurality of groups including at least one of products and services, based on the environment information for the second target person. The recommendation determining section may determine at least one of a product and a service to be recommended to the second target person, from among at least one of the products and services included in the group selected by the group selecting section, based on at least one of the plurality of attribute values for the second target person.

The group selecting section may select, with higher priority, groups associated with stores closer to a current position of the second target person among a plurality of stores, from among the plurality of groups.

The group selecting section may select a group to be recommended from among the plurality of groups, further based on a date and time of a most recent use of each of the plurality of stores by the second target person or on a time period that has passed from the most recent use of each store by the second target person.

The recommendation method determining section may determine the recommendation method further based on the environment information for the second target person.

According to a second aspect of the present invention, provided is a method. In the method, a computer may, for a first target person among a plurality of target people, determine whether to recommend at least one of a product and a service, based on at least one of a plurality of attribute values in an attribute database for storing the plurality of attribute values corresponding to a plurality of attributes for each of the plurality of target people. In the method, the computer may determine a recommendation method for recommending at least one of a product and a service to the first target person. In the method, the computer may acquire a recommendation result of the recommendation method for the first target person. In the method, the computer may store the recommendation result of the recommendation method in association with at least some attributes among the plurality of attributes in the attribute database. In the method, the computer may generate a recommendation model for selecting the recommendation method, using the attribute database that includes the recommendation result of the recommendation method as an attribute value of the at least some of the attributes.

When determining the recommendation method, the computer may determine a recommendation method for recommending at least one of a product and a service to a second target person, using the recommendation model.

When determining the recommendation method, the computer may determine recommendation methods that are different from each other for each portion of a plurality of first target people, each first target person being the first target person.

When determining the recommendation method, the computer may determine, as the recommendation method for the first target person, using at least one of electronic mail, an internet advertisement, direct mail, printing onto a receipt issued to the first target person, and a television advertisement.

When determining the recommendation method, the computer may determine, as the recommendation method for the first target person, providing an incentive that is at least one of a discount for at least one of a product and a service, an accompanying coupon, and accompanying points.

In the method, the computer may acquire environment information indicating an environment in which the second target person is located. In the method, the computer may select a group to be recommended from among a plurality of groups including at least one of products and services, based on the environment information for the second target person. When determining whether to make a recommendation, the computer may determine at least one of a product and a service to be recommended to the second target person, from among at least one of the products and services included in the group selected by the group selecting section, based on at least one of the plurality of attribute values for the second target person.

When selecting the group, the computer may select, with higher priority, groups associated with stores closer to a current position of the second target person among a plurality of stores, from among the plurality of groups.

When selecting the group, the computer may select a group to be recommended from among the plurality of groups, further based on a date and time of a most recent use of each of the plurality of stores by the second target person or on a time period that has passed from the most recent use of each store by the second target person.

When determining the recommendation method, the computer may determine the recommendation method further based on the environment information for the second target person.

According to a third embodiment of the present invention, provided is a program that is executed by a computer. The program may cause the computer to function as an attribute database connecting section connected to an attribute database for storing a plurality of attribute values corresponding to a plurality of attributes, for each of a plurality of target people. The program may cause the computer to function as a recommendation determining section that, for a first target person among the plurality of target people, determines whether to recommend at least one of a product and a service, based on at least one of the plurality of attribute values. The program may cause the computer to function as a recommendation method determining section that determines a recommendation method for recommending at least one of a product and a service to the first target person. The program may cause the computer to function as a recommendation result acquiring section that acquires a recommendation result of the recommendation method for the first target person. The program may cause the computer to function as a recommendation result storage section that stores the recommendation result of the recommendation method in association with at least some attributes among the plurality of attributes in the attribute database. The program may cause the computer to function as a recommendation model generating section that generates a recommendation model for selecting the recommendation method, using the attribute database that includes the recommendation result of the recommendation method as an attribute value of the at least some of the attributes.

The recommendation method determining section may determine a recommendation method for recommending at least one of a product and a service to a second target person, using the recommendation model.

The recommendation method determining section may determine recommendation methods that are different from each other for each portion of a plurality of first target people, each first target person being the first target person.

The recommendation method determining section may determine, as the recommendation method for the first target person, using at least one of electronic mail, an internet advertisement, direct mail, printing onto a receipt issued to the first target person, and a television advertisement.

The recommendation method determining section may determine, as the recommendation method for the first target person, providing an incentive that is at least one of a discount for at least one of a product and a service, an accompanying coupon, and accompanying points.

The program may cause the computer to function as an environment information acquiring section that acquires environment information indicating an environment in which the second target person is located. The program may cause the computer to function as a group selecting section that selects a group to be recommended from among a plurality of groups including at least one of products and services, based on the environment information for the second target person. The recommendation determining section may determine at least one of a product and a service to be recommended to the second target person, from among at least one of the products and services included in the group selected by the group selecting section, based on at least one of the plurality of attribute values for the second target person.

The group selecting section may select, with higher priority, groups associated with stores closer to a current position of the second target person among a plurality of stores, from among the plurality of groups.

The group selecting section may select a group to be recommended from among the plurality of groups, further based on a date and time of a most recent use of each of the plurality of stores by the second target person or on a time period that has passed from the most recent use of each store by the second target person.

The recommendation method determining section may determine the recommendation method further based on the environment information for the second target person.

The summary clause does not necessarily describe all necessary features of the embodiments of the present invention. The present invention may also be a sub-combination of the features described above.

### BRIEF DESCRIPTION OF THE DRAWINGS

Fig. 1 shows a configuration of a system 100 according to the present embodiment, along with a terminal 112, a terminal 152, and a terminal 192.
Fig. 2 shows an example of a data structure stored in the attribute DB 122 and the attribute DB 167 according to the present embodiment.
Fig. 3 shows an operational flow of the prediction model generating apparatus 150 according to the present embodiment.
Fig. 4 shows an example of evaluation results of an attribute prediction model generated by the attribute prediction model generating section 180 according to the present embodiment.
Fig. 5 shows an example of a selection result of an attribute prediction model generated by the attribute prediction model selecting section 185 according to the present embodiment.
Fig. 6 shows the attribute information acquisition flow of the attribute predicting apparatus 110 according to the present embodiment.
Fig. 7 shows an attribute prediction flow of the attribute predicting apparatus 110 according to the present embodiment.
Fig. 8 shows an example of a dependency relationship of prediction target attributes.
Fig. 9 shows an attribute addition flow of the system 100 according to the present embodiment.
Fig. 10 shows a configuration of a recommendation processing apparatus 190 according to the present embodiment, along with the terminal 192.
Fig. 11 shows an example of a data structure stored in the recommendation DB 980 according to the present embodiment.
Fig. 12 shows a recommendation process flow of the recommendation processing apparatus 190 according to the present embodiment.
Fig. 13 shows an example of a configuration of a computer 1900 according to the present embodiment.

### DESCRIPTION OF EXEMPLARY EMBODIMENTS

Hereinafter, some embodiments of the present invention will be described, but the embodiments do not limit the invention according to the claims. All the combinations of the features described in the embodiments are not necessarily essential to means provided by aspects of the invention.

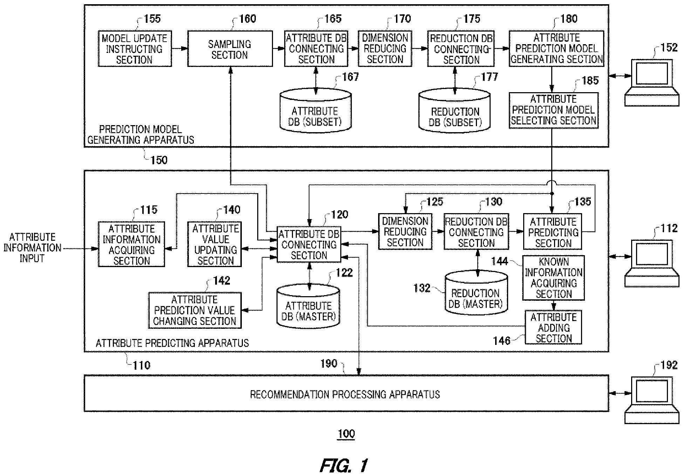

Fig. 1 shows a configuration of a system 100 according to the present embodiment, along with a terminal 112, a terminal 152, and a terminal 192. The system 100 registers attribute data (also referred to as "attribute information") of each target person who is a subscriber, member, or the like of a point service or the like, in an attribute database (attribute DB), and manages this attribute data. The system 100 generates an attribute prediction model that mainly predicts attributes for which attribute data is not acquired in the attribute DB, and predicts attribute values. The system 100 can utilize the attribute DB that includes the predicted attribute values for recommending products or services (referred to below as "products or the like"), performing market research, and the like.

The system 100 includes an attribute predicting apparatus 110, a prediction model generating apparatus 150, and a recommendation processing apparatus 190. The system 100 may be realized by a computer such as a server computer, a system made up of a plurality of computers, or a distributed system made up of a plurality of computers that are distributed geographically. The system 100 manages attribute information of target people, such as each member using a point system provided by one business, a shared point system that is shared among a plurality of businesses, a credit card, electric money, or any other membership service.

The attribute predicting apparatus 110 inputs and registers attribute information of a target person, and predicts unknown attribute information based on the registered attribute information. The attribute predicting apparatus 110 according to the present embodiment can compare the attribute values of a plurality of target people regardless of whether the attribute information is known or unknown, and therefore also predicts this attribute information for a target person for whom the attribute information is known. The attribute predicting apparatus 110 includes an attribute information acquiring section 115, an attribute DB connecting section 120, an attribute DB 122, a dimension reducing section 125, a reduction DB connecting section 130, a reduction DB 132, an attribute predicting section 135, an attribute value updating section 140, and an attribute prediction value updating section 142.

The attribute information acquiring section 115 acquires the attribute information of the target person and stores this attribute information in the attribute DB 122, via the attribute DB connecting section 120. The source of the attribute information of the target person is, for example, at least one of information that the target person must or may fill in or input when registering as a new member, the target person's response to a member questionnaire, payment information determined due to the target person purchasing a product or the like at a store or the like, payment information determined due to the target person purchasing a product or the like on an electronic commerce site, information on a website accessed by the target person, information of an Internet advertisement (web advertisement) clicked on by the target person in a website, and information of a television program watched by the target person, and this source is provided with the consent of the target person. The attribute information acquiring section 115 may collect unknown attribute values dynamically by, for example, accessing the attribute DB 122 via the attribute DB connecting section 120 at arbitrary timings, such as periodically, searching for a target person for whom an attribute value for at least one attribute is unknown, and issuing a member questionnaire via a website or the like.

The attribute DB connecting section 120 is connected to the attribute DB 122 and processes access to the attribute DB 122 from each section within the system 100. The attribute DB 122 stores attribute information including a plurality of attribute values corresponding to a plurality of attributes, for each of a plurality of target people. The attribute DB 122 may be realized by a storage region of at least a portion of an external storage apparatus such as a hard disk drive connected to a computer that executes the processing of the system 100, and may be realized by a storage apparatus provided by a cloud storage service or the like outside the system 100, for example.

The dimension reducing section 125, and reduces the dimensions of a plurality of attributes based on the plurality of attribute values, which are stored in the attribute DB 122, of each of the plurality of target people. As an example, the dimension reducing section 125 uses a topic model to calculate a plurality of values representing a degree or probability with which the attribute information of each target person included in the attribute DB 122 corresponds to each of a plurality of topics. The dimension reducing section 125 adds the plurality of calculated values, as a plurality of attributes for dimension reduction, to the attribute information of each target person. In this way, the dimension reducing section 125 can reduce the large number of attributes forming the attribute information of a target person to a smaller number of attributes for each topic. In accordance with this, the dimension reducing section 125 may remove, from the explanatory variables of the attribute prediction model, at least some or all of the attributes other than the plurality of attributes added for dimension reduction. The dimension reducing section 125 applies the dimension reduction process described above to the attribute DB 122, to convert the attribute DB 122 into the reduction DB 132.

The reduction DB connecting section 130 is connected to the reduction DB 132, and processes writing access from the dimension reducing section 125 to the reduction DB 132 and reading access of the reduction DB 132 from the attribute predicting section 135. The reduction DB 132 stores, as the attribute information, a plurality of attribute values corresponding to a plurality of attributes including, at least in part, the attributes reduced by the dimension reducing section 125, for each of the plurality of target people. In the same manner as the attribute DB 122, the reduction DB 132 may also be realized by an external storage apparatus connected to a computer that executes the processing of the system 100, and may be realized by a storage apparatus provided by a cloud storage service or the like outside the system 100, for example.

The attribute predicting section 135 receives the attribute prediction models selected for each of one or more attributes of a prediction target (referred to as "prediction target attributes") in the attribute DB 122, from the prediction model generating apparatus 150. The attribute predicting section 135 predicts the attribute values of the prediction target attributes for each of the plurality of target people, using the received attribute prediction models. More specifically, for each of all of the target people or at least some of the target people, the attribute predicting section 135 performs the selected attribute prediction model, for each prediction target attribute, to calculate a prediction value of a prediction target attribute based on the attribute information of each target person stored in the reduction DB 132. The attribute predicting section 135 stores the calculated prediction values in the attribute DB 122, via the attribute DB connecting section 120.

The attribute DB 122 according to the present embodiment stores both the known attribute values based on the attribute information acquired by the attribute information acquiring section 115 and the prediction values predicted by the attribute predicting section 135, in association with each of the plurality of attributes, as the attribute values in a broad sense. In the present embodiment, for the sake of simplifying the description, the attribute DB 122 is assumed to store the known attribute values and the prediction values using the same expression format. In this case, the attribute information acquiring section 115 converts the expression format of the raw data of the acquired attribute information, and the attribute DB 122 stores the attribute values whose expression format has been converted as the known attribute values. For example, the attribute information acquiring section 115 may convert absolute evaluation attribute values acquired as the raw data of the attribute information into relative evaluation attribute values, and the attribute DB 122 may store these attribute values that have been converted into relative evaluations. As such an example, there is a case where the attribute DB 122 stores, instead of an age of a target person expressed by an absolute evaluation such as 35 years, an attribute value that has been converted into a relative value (e.g. a deviation value, percentile ranking, or the like) among all the target people whose ages are known. As another example, there is a case where the attribute DB 122 stores, for the gender of a target person, an attribute value converted into a probability of being male, a deviation value of the possibility of being male, or the like. Here, the attribute DB 122 can acquire the compatibility between a known attribute value and a prediction value by storing the prediction value of the attribute in an expression format such as a deviation value, percentile ranking, probability, or the like in the same manner as the known attribute value that has been converted. In this way, the system 100 can use a known attribute value as an explanatory variable when generating the attribute prediction model, and can also use a prediction value as an explanatory variable when using the attribute prediction model. As a result, the attribute predicting apparatus 110 can also predict an attribute value of a prediction target attribute using this attribute prediction model for a target person for whom known attribute values have not been acquired for at least some of the attributes that are explanatory variables of the attribute prediction model.

The attribute DB 122 can be realized in various other forms, such as a form in which the known attribute values are stored in the pre-conversion expression format and the prediction values are stored in the post-conversion expression format. In such a case as well, the system 100 can realize the same operation as in a case where the known attribute values and the prediction values are stored in the same expression format, by performing the conversion from the expression format of the prediction values to the expression format of the known attribute values every time a prediction value is referenced instead of a known attribute value. Furthermore, the attribute DB 122 may separately store the raw data of the attribute information acquired by the attribute information acquiring section 115, in addition to the known attribute values whose expression format has been converted.

The attribute value updating section 140, on a condition that the certainty of a prediction value of a certain attribute stored in the attribute DB 122 is greater than or equal to a threshold value, updates the attribute value of this attribute based on the prediction value. In this way, when the certainty of a prediction value is sufficiently high, an unacquired attribute value can be set based on the prediction value.

When an attribute value of a certain attribute stored in the attribute DB 122 is known, the attribute prediction value updating section 142 updates the prediction value of this attribute based on the known attribute value, in response to the prediction value of this attribute deviating from the known attribute value by at least a reference amount. In this way, when a prediction value deviates significantly from the known attribute value for a portion of the target people, this prediction value can be replaced with a more accurate value.

The attribute predicting apparatus 110 may include an attribute data acquiring section 144 and an attribute adding section 146. The attribute data acquiring section 144 acquires known information indicating a known attribute value of an additional attribute that is to be added to the attribute database, for at least some of the plurality of target people. For example, the attribute data acquiring section 144 receives the known information from a user or the like of the system 100 or the attribute predicting apparatus 110, via the terminal 112.

The attribute adding section 146 adds the additional attribute to the plurality of attributes in the attribute DB 122. The attribute adding section 146 sets the known attribute value of the additional attribute for each target person included in the known information, based on the attribute value indicated by the known information acquired by the attribute data acquiring section 144. The attribute adding section 146 does not set a known attribute value for target people for whom a known attribute value is not indicated by the known information.

When an additional attribute is added to the attribute DB 122, the system 100 may process the additional attribute as a prediction target attribute. Essentially, the prediction model generating apparatus 150 may use the attribute prediction model generating section 180 to generate one or more attribute prediction models for predicting the attribute value of the prediction target attribute, with the additional attribute as the prediction target attribute. Furthermore, in a case where a plurality of attribute prediction models have been generated, the prediction model generating apparatus 150 may select the attribute prediction model to be used to predict the attribute value of the prediction target attribute, using the attribute prediction model selecting section 185, based on the prediction error of each attribute prediction model.

The prediction model generating apparatus 150 generates an attribute prediction model for predicting each of one or more attributes that are prediction targets in the attribute DB 122. The prediction model generating apparatus 150 includes a model update instructing section 155, a sampling section 160, an attribute DB connecting section 165, an attribute DB 167, a dimension reducing section 170, a reduction DB connecting section 175, a reduction DB 177, an attribute prediction model generating section 180, and an attribute prediction model selecting section 185.

The model update instructing section 155 issues instructions to update the attribute prediction model used by the attribute predicting apparatus 110, in response to a predetermined time period having passed. For example, the model update instructing section 155 issues instructions to update the attribute prediction model by triggering the start of processing for the sampling section 160 or the like, in response to the time period that is one day, one week, one month, or the like having passed from the previous update of the attribute prediction model. Instead, the model update instructing section 155 may instruct the attribute prediction model selecting section 185 to transmit an attribute prediction model that has already been prepared in the prediction model generating apparatus 150 during this time period to the attribute predicting apparatus 110, in response to this time period having passed.

The sampling section 160 samples some of the target people among the plurality of target people for whom the attribute DB 122 stores the attribute information, and stores or copies the attribute information stored in the attribute DB 122 in association with the sampled target people into the attribute DB 167 via the attribute DB connecting section 165. Here, the sampling section 160 may extract a number of target people equal to the number of samples to be used in the generation of the attribute prediction model, from among target people for whom the attribute values of the prediction target attribute are known among the target people registered in the attribute DB 122. Instead, the sampling section 160 may randomly extract a number of people equal to the number of samples to be used in the generation of the attribute prediction model, from among the target people registered in the attribute DB 122.

The attribute DB connecting section 165 is connected to the attribute DB 167, and processes access to the attribute DB 167 from each section in the prediction model generating apparatus 150. The attribute DB 167 stores the attribute information including a plurality of attribute values corresponding to a plurality of attributes, for each of the plurality of target people sampled by the sampling section 160 among the target people registered in the attribute DB 122. In the same manner as the attribute DB 122, the attribute DB 167 may also be realized by an external storage apparatus connected to a computer that executes the processing of the system 100, or may be realized by a storage apparatus provided by a cloud storage service or the like outside the system 100, for example.

The dimension reducing section 170, and reduces the dimensions of the plurality of attributes based on the plurality of attribute values which are stored in the attribute DB 167, of each of the plurality of target people. The dimension reducing section 170 may convert the attribute DB 167 into the reduction DB 177 by applying the same dimension reduction process as used by the dimension reducing section 125 to the attribute DB 167.

The reduction DB connecting section 175 is connected to the reduction DB 177, and processes writing access to the reduction DB 177 from the dimension reducing section 170 and reading access of the reduction DB 177 from the attribute prediction model generating section 180. The reduction DB 177 stores attribute information that includes a plurality of attribute values corresponding to a plurality of attributes that include, at least in part, the attributes reduced by the dimension reducing section 170, for each of the plurality of target people sampled by the sampling section 160. In the same manner as the attribute DB 122, the reduction DB 177 may also be realized by an external storage apparatus connected to a computer that executes the processing of the system 100, or may be realized by a storage apparatus provided by a cloud storage service or the like outside the system 100, for example.

The attribute prediction model generating section 180 uses the attribute DB 167 to generate a plurality of attribute prediction models that each predict an attribute value of a prediction target attribute based on the attribute value of at least one attribute that is not a prediction target attribute among the plurality of attributes. The attribute prediction model generating section 180 according to the present embodiment uses the attribute values associated with the sampled some target people from the attribute DB 122 to generate the plurality of attribute prediction models, by referencing the attribute DB 167. In this way, the attribute prediction model generating section 180 can reduce the calculation amount and the calculation time needed when generating each of the plurality of attribute prediction models using the attribute information of all of the target people stored in the attribute DB 122. In a case where a sufficient calculation capability can be ensured, the attribute prediction model generating section 180 may generate the plurality of attribute prediction models using the attribute information of each target person stored in the attribute DB 122 without using sampling.

Furthermore, in the present embodiment, the attribute prediction model generating section 180 may indirectly use the attribute DB 167 by referencing the reduction DB 177 converted from the attribute DB 167. In this way, the attribute prediction model generating section 180 can predict the attribute value of the prediction target attribute from the attribute value of at least one attribute among the plurality of attributes resulting from the dimension reduction. Here, by omitting all or at least some of the attributes other than the plurality of attributes added for the dimension reduction by the dimension reducing section 170 from the explanatory variables of the attribute prediction model, the attribute prediction model generating section 180 can generate, by effectively utilizing the result of the dimension reduction, the attribute prediction model in which only some of the attributes that can affect the prediction of the prediction target attribute among the large number of attributes are used as explanatory variables. As a result, the attribute prediction model generating section 180 can reduce the calculation amount and the calculation time needed to generate the plurality of attribute prediction models.

In the above description, for each of a plurality of prediction target attributes, the attribute prediction model generating section 180 can generate a plurality of attribute prediction models for predicting the prediction target attribute. Here, the attribute prediction model generating section 180 can select different attribute prediction models as a first attribute prediction model to be used for predicting an attribute value of a first prediction target attribute and a second attribute prediction model to be used for predicting an attribute value of a second prediction target attribute. In each of these plurality of attribute prediction models, at least one of a prediction algorithm and a hyper parameter that is not updated through learning may be different from that of the other attribute prediction models. For each of the plurality of attribute prediction models, the attribute prediction model generating section 180 causes a learnable parameter in the attribute prediction model to be learned and performs a process to minimize a prediction error with which each of the plurality of attribute prediction models predicts the attribute value of the prediction target attribute.

The attribute prediction model selecting section 185 selects the attribute prediction model to be used to predict the attribute value of a prediction target attribute, based on the prediction error of each of the plurality of attribute prediction models generated by the attribute prediction model generating section 180 for this prediction target attribute, for each of the plurality of prediction target attributes. For example, for each prediction target attribute, the attribute prediction model selecting section 185 selects the attribute prediction model having the smallest prediction error from among the plurality of attribute prediction models. At this time, for each prediction target attribute, the attribute prediction model selecting section 185 can select an attribute prediction model in which at least one of the hyper parameter and the prediction algorithm is different. The attribute prediction model selecting section 185 provides the attribute predicting section 135 in the attribute predicting apparatus 110 with the attribute prediction model selected for each prediction target attribute. As an example, the attribute prediction model selecting section 185 provides the attribute predicting section 135 with a set of hyper parameter values and identification information designating a prediction algorithm to be used in the attribute prediction model.

The recommendation processing apparatus 190 selects, based on the attribute value of the prediction target attribute that is the prediction target for each of the plurality of target people, whether to recommend a product or the like associated with the prediction target attribute to the target person. Here, for each of the plurality of target people, the recommendation processing apparatus 190 may make a determination to recommend a product or the like to the target person if the attribute value of a prediction target attribute indicating a preference level toward a specified product or the like indicates a preference level greater than or equal to a threshold value. Furthermore, the recommendation processing apparatus 190 may make a determination to recommend a product or the like based on the attribute value of a prediction target attribute indicating at least a portion of one or more basic attributes, lifestyle attributes, and inclinations (e.g. whether the target person has a place of residence or a car, or whether the target person is luxury-inclined or thrift-inclined).

The recommendation processing apparatus 190 recommends the product or the like to the target person who has been determined to receive a recommendation among the plurality of target people. As an example, the recommendation processing apparatus 190 may provide electronic mail, direct mail, an Internet advertisement, and the like that includes an advertisement for this product or the like to the target person, or provide a television commercial including an advertisement for this product or the like to viewers including the target person, or provide a service such as a coupon, a discount, and point awards that give incentives for the purchase of this product or the like.

The terminal 112 is connected to the attribute predicting apparatus 110 directly or indirectly via a network, and provides a user interface for performing a database process such as a statistical process, attribute addition and/or deletion, attribute value setting, narrowing down the target people that fulfill an extraction condition for which at least one attribute group is set, and the like on the attribute information of the plurality of target people stored in the attribute DB 122 or the reduction DB 132 of the attribute predicting apparatus 110, and for performing an evaluation or the like of the attribute prediction model for each prediction target attribute of the prediction target.

The terminal 152 is connected to the prediction model generating apparatus 150 directly or indirectly via a network, and provides a user interface for performing a database process such as the addition, change, and/or deletion of prediction algorithms capable of being generated by the attribute prediction model generating section 180; range designation and value designation of hyper parameters provided to each attribute prediction model by the attribute prediction model generating section 180; checking, evaluation, and inter-attribute-model comparison of learned parameters and prediction results of each of the plurality of attribute prediction models generated by the attribute prediction model generating section 180; selection designation or selection assistance for manual selection of an attribute prediction model for the attribute prediction model selecting section 185; addition and/or deletion of attributes and setting of attribute values for the attribute DB 167 that is a subset of the attribute DB 122; and narrowing down the target people that fulfill the extraction condition for which at least one attribute group is set, and for performing a statistical process or the like on the attribute information of the plurality of target people stored in the attribute DB 167 or the reduction DB 177 of the prediction model generating apparatus 150.

The terminal 192 is connected directly or indirectly to the terminal 192 via a network, and provides a user interface for managing the recommendation process of the recommendation processing apparatus 190. As an example, the terminal 192 provides a user interface for setting or adjusting a condition for narrowing down the target people to receive recommendations according to an advertising budget and a budget for discounting products or giving points, checking the narrowed-down results of the target people to receive recommendations, setting the recommendation method, instructing the execution of the recommendations, and the like.

The terminal 112, the terminal 152, and the terminal 192 may be desktop computers, or may be portable terminals such as tablets and smartphones.

According to the system 100 described above, for each prediction target attribute, it is possible to generate a plurality of attribute prediction models for predicting attribute values and to select a favorable attribute prediction model for each prediction target attribute, based on the attribute information of the plurality of target people stored in the attribute DB 122 or the attribute DB 167 that is a subset of the attribute DB 122. Therefore, according to the system 100, it is possible to further improve the prediction accuracy of each prediction target attribute.

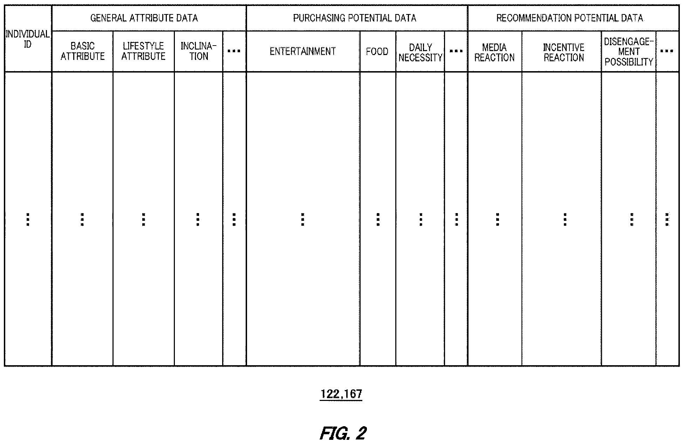

Fig. 2 shows an example of a data structure stored in the attribute DB 122 and the attribute DB 167 according to the present embodiment. The attribute DB 122 and the attribute DB 167 store, for each of the plurality of target people, individual identification information (individual ID) that identifies an individual and attribute information concerning a plurality of attributes possessed by this individual.

The "individual ID" is an identifier by which the system 100 identifies each individual target person, and is a membership number, login ID, or the like of a service provided by the system 100, for example. Instead, the attribute DB 122 and the attribute DB 167 may use information generated based on the name, electronic mail address, physical address, or telephone number of the target person, identification information of a portable terminal possessed by the target person, or a combination including at least one of these, as the "individual ID".

The "attribute information" is attribute values for each type of attribute possessed by the target person. Each attribute stored by the attribute DB 122 and the attribute DB 167 in the present embodiment is broadly classified as one of general attribute data, purchasing potential data, and recommendation potential data.

The "general attribute data" is a set of attributes indicating characteristics of each target person, and generally indicates characteristics of the target person themselves in particular. The "general attribute data" may include at least one attribute from among one or more attributes classified as basic attributes, one or more attributes classified as lifestyle attributes, and one or more attributes classified as inclinations.

The "basic attributes" are basic information of each target person, and include at least one of the name, date of birth, age or age group, gender, physical address, telephone number, and the like, for example, as one or more attributes classified as basic attributes. The "basic attributes" may mainly be attributes input during a new registration of a target person, a change of registration content, or the like, but at least some of the attributes may be registered arbitrarily or may be prediction targets.

The "lifestyle attributes" are information concerning lifestyle aspects of a target person, and can include at least one of married/unmarried status, living situation, household annual income, individual annual income, occupation type, ownership of a car, ownership of a residence, and the like, for example, as one or more attributes classified as "lifestyle attributes". The attribute values concerning the "lifestyle attributes" may be gathered during new registrations or may be gathered using various methods such as questionnaires, or may be prediction targets.

The "inclinations" are information indicating an inclination, tendency, and/or preference of a target person, and can include at least one of quality-inclined, challenge-inclined, consistency-inclined, brand-name-inclined, or the like for clothing; high-class-inclined, thrift-inclined, discount-inclined, or the like for food; convenience-store-inclined, urban-inclined, rural-inclined, or the like for housing; health-inclined; career-inclined; globally-inclined; or the like, for example, as one or more attributes classified as the "inclinations". Furthermore, the inclinations may include at least one of a preference or lack thereof or preference level for various hobbies such as driving, gourmet food, travel, and sports, a preference or lack thereof or preference level for various products or the like, a preference or lack thereof or preference level for various types of websites or the like, for example, as attributes concerning the preference of the target person. The attributes concerning the "inclinations" can be added to various types of research according to the objective of the research. The attribute values concerning the "inclinations" may be gathered during new registrations, may be gathered using various methods such as questionnaires, or may be prediction targets.

The "purchasing potential data" is a set of attributes indicating the purchasing potential of each target person for each of a plurality of products or the like or for a plurality of product groups or service groups. The "purchasing potential data" may include attributes associated with each product or each service corresponding to a genre or the like of each genre, type, or classification of products such as entertainment, food, and daily necessities, for example. Each attribute of the "purchasing potential data" may be a preference attribute indicating the preference level of a target person for a product or the like associated with this attribute.

As an example, the "purchasing potential data" includes attributes corresponding to each of a large number of products or the like that are targets of sales management by a member service provided by the system 100. The "purchasing potential data" may include each attribute in correspondence with each code value of a JAN code, for example, identifying each product or the like, in which case one or more attributes are assigned to every single product or the like to which a JAN code has been assigned. In a case where the member service provided by the system 100 provides a shared point system spanning a plurality of businesses, the purchasing potential data can include tens of thousands to hundreds of thousands, or even more, attributes. Furthermore, the "potential purchasing data" may include attributes corresponding to product groups or service groups. For example, the "purchasing potential data" may include attributes corresponding to a product group such as beer, alcohol, and/or drinks, for example.

The "purchasing potential data" may store for each target person, as known attribute values, a purchase record (presence or absence of purchases, purchase amount, purchase time, place of purchase, and the like), and/or a preference level or the like that quantifies the reaction or the like of the target person to a product questionnaire or advertisement. Furthermore, the "purchasing potential data" may store prediction values predicted using the attribute prediction models as at least a portion of the attribute values.

The "recommendation potential data" is a set of attributes indicating characteristics of each target person concerning recommendations. As an example, the recommendation potential data" may include at least one of one or more attributes concerning a media reaction, one or more attributes concerning an incentive reaction, and one or more attributes concerning the possibility of disengagement.

The "media reaction" includes one or more attributes indicating, for each type of media used for the recommendation such as direct mail, electronic mail, advertisements printed on receipts, Internet advertisements, and TV advertisements, for example, an effectiveness, evaluation value, or the like of the recommendation that used this media for the target person. For example, in a case where a certain target person does not react to direct mail, the recommendation processing apparatus 190 may decrease the attribute value of an attribute concerning the effectiveness, evaluation value, or the like of direct mail or set a lower attribute value for this attribute. Furthermore, in a case where a certain target person clicks Internet advertisements with a frequency greater than or equal to a reference frequency, a case where a certain target person purchases a product through an Internet advertisement, or the like, the recommendation processing apparatus 190 may increase the attribute value of an attribute concerning the effectiveness, evaluation value, or the like of Internet advertisements or set a higher attribute value for this attribute.

The "incentive reaction" includes one or more attributes indicating, for each incentive such as providing discounts, coupons, points, point increases, and promotional items, for example, the effectiveness, evaluation value, or the like of a recommendation using this incentive for the target person. For example, in a case where a certain target person does not end up purchasing a product or the like despite being given a discount, the recommendation processing apparatus 190 may decrease the attribute value of an attribute concerning the effectiveness, evaluation value, or the like of a discount or set a lower attribute value for this attribute. Furthermore, in a case where a certain target person purchased a product or the like that provides points, the recommendation processing apparatus 190 may increase the attribute value of an attribute concerning the effectiveness, evaluation value, or the like of providing points or set a higher attribute value for this attribute.

The "disengagement possibility" includes, for each sales business, and/or product maker, or service provider, for example, one or more attributes indicating the possibility of the product or the like of this business or the like not being used. For example, in a case where at least a reference time period has passed from when a certain target person last purchased a product from a sales business or the like, the attribute predicting apparatus 110 treats this target person as having become disengaged from this seller and stores an attribute value indicating this disengagement in the attribute DB 122. Instead, the attribute predicting apparatus 110 may store an disengagement evaluation value calculated according to the time period that has passed from when this target person last used this sales business, in the attribute DB 122 as an attribute value.

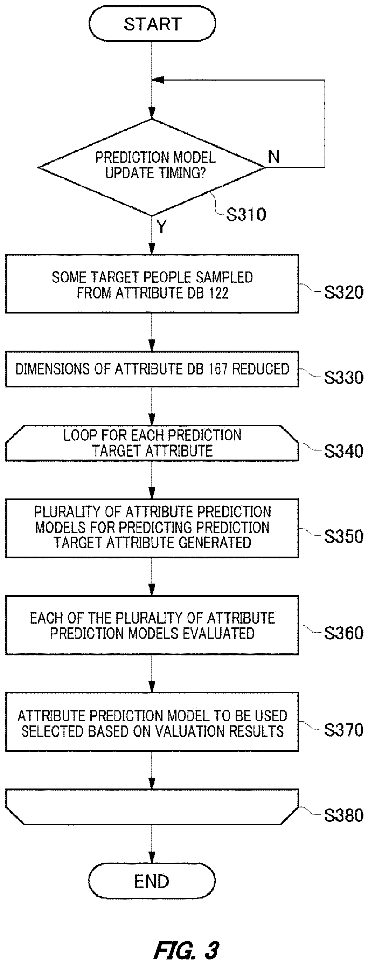

Fig. 3 shows an operational flow of the prediction model generating apparatus 150 according to the present embodiment. At step S310, the model update instructing section 155 issues instructions to update the attribute prediction model used by the attribute predicting apparatus 110, in response to a predetermined time period having passed. Instead of or in addition to this, the model update instructing section 155 may receive instructions from a user, manager, or the like of the system 100 and issues instructions to update the attribute prediction model.

Here, the prediction model generating apparatus 150 may set all of the attributes in the attribute DB 122 or the attribute DB 167 to be prediction targets, or set each attribute except for some attributes such as the name of a target person to be prediction targets, or set each attribute except for basic attributes included in the general attribute data to be prediction targets, or set the purchasing potential data and/or recommendation potential data to be prediction targets. Furthermore, the prediction model generating apparatus 150 may omit, from the prediction targets, attributes for dimension reduction added by the dimension reducing section 170. Yet further, the prediction model generating apparatus 150 may set only attributes designated by the user or the manager of the system 100, among all of the attributes in the attribute DB 122 or the attribute DB 167, to be prediction targets.

The prediction model generating apparatus 150 may issue instruction to update the attribute prediction model at timings that differ according to the prediction target attribute. For example, the prediction model generating apparatus 150 may issue instructions to update the attribute prediction model periodically for attributes associated with the general attribute data, issue instructions to update the attribute prediction model every time a predetermined amount of purchasing data of a product or the like corresponding to the attribute is received, for example, for attributes associated with the purchasing potential data, and issue instructions to update the attribute prediction model every time a predetermined number of recommendations are made, for example, for attributes associated with the recommendation potential data. Furthermore, the prediction model generating apparatus 150 may set the update frequency of attribute prediction models for predicting attributes associated with the purchasing potential data to be lower than the update frequency of attribute prediction models for predicting attributes associated with the general attribute data. The purchasing potential data usually has a greater number of attributes than the general attribute data, due to the purchasing potential data including attributes corresponding to individual products or the like, and therefore the prediction model generating apparatus 150 can significantly reduce the calculation amount of the prediction model generating apparatus 150 by lowering the update frequency of the attribute prediction models for predicting attributes associated with the purchasing potential data.

At S320, the sampling section 160 samples some of the target people from the attribute DB 122, and stores the attribute information stored in the attribute DB 122 in association with the sample target people in the attribute DB 167 via the attribute DB connecting section 165.

At S330, the dimension reducing section 170 reduces the dimensions of the attribute DB 167 using a topic model such as latent Dirichlet allocation (LDA) or probabilistic latent semantic analysis, for example. When using the topic model, the dimension reducing section 170 may model the number of topics as each of a plurality of types such as 10, 20, 30, ..., 100, and store the plurality of attributes generated for each number of topics in the reduction DB 177 as the attributes for dimension reduction. In this way, the attribute prediction model generating section 180 can set the number of topics to be used as hyper parameters of the attribute prediction models, and the attribute prediction model selecting section 185 can select the attribute prediction model having the optimal number of topics.

Here, the dimension reducing section 170 may set all of the attributes in the attribute DB 122 or the attribute DB 167 as the evaluation targets of the topic generation, or may instead set some of the attributes in the attribute DB 122 or the attribute DB 167 as the evaluation targets of the topic generation. For example, the dimension reducing section 170 may set the attributes included in the general attribute data as the evaluation targets of the topic generation, and does not need to use the attributes included in the purchasing potential data and recommendation potential data for the topic generation. As another example, the dimension reducing section 170 may set only the attributes included in only some of the basic attributes, lifestyle attributes, and inclinations included in the general attribute data as the evaluation targets of the topic generation. As an example, the dimension reducing section 170 may set only the attributes included in the basic attributes and lifestyle attributes as the evaluation targets of the topic generation, and does not need to use the attributes included in the inclinations for the topic generation. In a case where all of the attributes are set as evaluation targets of the topic generation, it is possible to include even small differences between target people (e.g. whether they purchased specific products) in the evaluation and reflect this in the attribute values after the dimension reduction, but this increases the calculation amount needed for the dimension reduction process. In a case where only some of the attributes are set as evaluation targets of the topic generation, it is possible to suppress the calculation amount by using only the portion of attributes being focused on by the user, manager, or the like of the system 100.

Furthermore, the dimension reducing section 170 may reduce the dimensions of the attribute DB 167 using another method, instead of or in addition to the topic model. For example, the dimension reducing section 170 may omit attributes for which the percentage of target people for whom known attribute values are stored is less than a reference percentage, from the explanatory variables of the attribute prediction model.

Next, the prediction model generating apparatus 150 repeats the processes between S340 and S380 (S350 to S370) for each prediction target attribute.

At S350, the attribute prediction model generating section 180 generates one or more attribute prediction models for predicting the attribute value of the prediction target attribute. First, the attribute prediction model generating section 180 extracts the attribute information of a plurality of target people for modeling to be used to generate the attribute prediction model, from the attribute information of each target person stored in the attribute DB 167. The attribute prediction model generating section 180 extracts the attribute information for which the attribute values of the prediction target attributes are known, i.e. the attribute information for which attribute values are actually acquired for the prediction target attributes, as the attribute information of the target people for modeling. Here, the attribute prediction model generating section 180 may perform the extracting while prioritizing attribute information having a higher percentage of known attribute values among each attribute that could possibly be used as an explanatory variable of the attribute prediction model (i.e. each attribute for which an attribute value is input to the attribute prediction model as an explanatory variable candidate). In a case where the number of target people for modeling is less than or equal to a predetermined reference number, the attribute prediction model generating section 180 may increase the number of samples using a method such as boost sampling.

Next, the attribute prediction model generating section 180 generates a plurality of attribute prediction models, using the extracted attribute information of the target people as the learning attribute information. The attribute prediction model generating section 180 generates the plurality of attribute prediction models among which at least one of the prediction algorithm and a hyper parameter not updated through learning of each attribute prediction model is different from that of the other attribute prediction models. The attribute prediction model generating section 180 may select the prediction algorithm from among various types of machine learning algorithms including random forest, gradient boosting, logistic regression, neural networks, support vector machines (SVMs), and the like, for example. Furthermore, the attribute prediction model generating section 180 may obtain a group of a plurality of hyper parameters that are different from each other for each selected prediction algorithm, by independently selecting, from among a group of a plurality of setting values that can be set as hyper parameters, each of one or more hyper parameters that can be set for prediction algorithms such as the number of topics of dimension reduction in the dimension reducing section 170, depth of the decision tree in random forest, depth of the tree in gradient boosting, the normalization parameter in logistic regression, and the number of neurons and number of layers in the neural network.

The attribute prediction model generating section 180 optimizes, through learning using learning attribute information, each of the plurality of attribute prediction models in which at least one of the prediction algorithm and a group of hyper parameters obtained in the manner described above is different from that of the other attribute prediction models. Essentially, for each piece of learning attribute information, when an attribute value for an attribute other than a prediction target attribute in this learning attribute information is input to the attribute prediction model, the attribute prediction model generating section 180 updates the learnable parameter of the attribute prediction model in a manner to output a prediction value closer to the known attribute value of the prediction target attribute in this learning attribute information. In this way, the attribute prediction model generating section 180 learns and optimizes the learnable parameter for each attribute prediction model. Here, "optimization" does not necessarily mean minimizing the prediction error of the attribute prediction model (i.e. making all of the learnable parameters have optimal values), and can also mean a state in which the attribute prediction model generating section 180 has finished the learning process for further reducing the prediction error of the attribute prediction model (i.e. a state in which the learning processing that can be performed has realistically ended).

Here, the attribute prediction model generating section 180 may limit the explanatory variables of an attribute prediction model to be only known attribute values. In this case, although the number of samples that can be used as the learning attribute information is limited, the attribute prediction model generating section 180 can increase the possibility of being able to generate the attribute prediction model with higher accuracy based on the real attribute information. Instead, the attribute prediction model generating section 180 may use the prediction values of attributes as some or all of the explanatory variables. That is, the attribute prediction model generating section 180 may generate a second group of one or more attribute prediction models for predicting an attribute value of a second prediction target attribute using the prediction value of a first prediction target attribute predicted by a first attribute prediction model. When generating a second plurality of attribute prediction models, by making it possible to use a prediction value of a first prediction target attribute predicted by a first attribute prediction model that has already been generated as an explanatory variable, the attribute prediction model generating section 180 can also use learning attribute information lacking some of the known attribute values and increase the accuracy of the attribute prediction models using a greater amount of learning attribute information.

The attribute prediction model generating section 180 may use, as the prediction error, a value obtained by accumulating a difference between an expected value and a prediction value of the prediction target attribute predicted by an attribute prediction model from each piece of attribute information, for all of the attribute information that is a prediction error evaluation target. The calculation method for such an error can be any of various methods including a method of summing the squared differences between the prediction values and expected values, for example. Instead, the attribute prediction model generating section 180 may use a value that decreases as the AUC (Area Under the Curve), described further below, increases (e.g. a value of 1-AUC) as an indicator of the prediction error.

Here, the "prediction error" also encompasses an indicator that changes according to the "prediction error". That is, as an example, an indicator of the prediction accuracy also corresponds to the indicator of the prediction error, a higher prediction accuracy corresponds to a lower prediction error, and a lower prediction accuracy corresponds to a higher prediction error. Accordingly, the attribute prediction model generating section 180 may use the AUC that becomes greater as the prediction accuracy becomes higher as the indicator of the prediction error (indicator that becomes smaller as the prediction error becomes higher). In this case, the prediction error being high means that the value of the indicator of the prediction error is small.

At S360, the attribute prediction model generating section 180 evaluates each of the plurality of learned attribute prediction models that have been generated. The attribute prediction model generating section 180 may evaluate the attribute prediction models based on only the prediction error, or may include not only the prediction error but also other conditions such as the calculation amount being smaller and/or the number of attributes referenced being fewer, for example, as evaluation parameters. Furthermore, the attribute prediction model generating section 180 may evaluate the attribute prediction models using the value of an objective function that includes a term concerning the prediction error, which is used to optimize the prediction algorithm. Here, the attribute prediction model generating section 180 may calculate the prediction error difference of each of the plurality of attribute prediction models using cross-validation. In this case, the attribute prediction model generating section 180 causes the plurality of attribute prediction models to be learned using a portion of the extracted attribute information for modelling, and calculates the prediction error of each of the plurality of attribute prediction models using attribute information that is not used for learning, within the attribute information for modelling.

At S370, the attribute prediction model selecting section 185 selects, based on the evaluation results of the prediction error or the like for each of the plurality of attribute prediction models, the attribute prediction model to be used for predicting the attribute value of this prediction target attribute. As an example, the attribute prediction model selecting section 185 selects the attribute prediction model having the smallest prediction error (i.e. the largest prediction accuracy) among the plurality of attribute prediction models. Instead, the attribute prediction model selecting section 185 may select the attribute prediction model having the highest evaluation, using the evaluation results in which a condition other than the prediction error is also included as an evaluation parameter, from among the plurality of attribute prediction models. Here, the attribute prediction model selecting section 185 may further select the second attribute prediction model to be used to predict the attribute value of a second prediction target attribute, based on evaluation results such as the prediction error of each of one or more second attribute prediction models in which prediction values obtained by other attribute prediction models such as described above are explanatory variables.

The prediction model generating apparatus 150 can select attribute prediction models that have been independently optimized for each prediction target attribute, by performing the processing of S350 to S370 for each prediction target attribute of a prediction target. In this way, the prediction model generating apparatus 150 can further increase the prediction accuracy of each prediction target attribute.

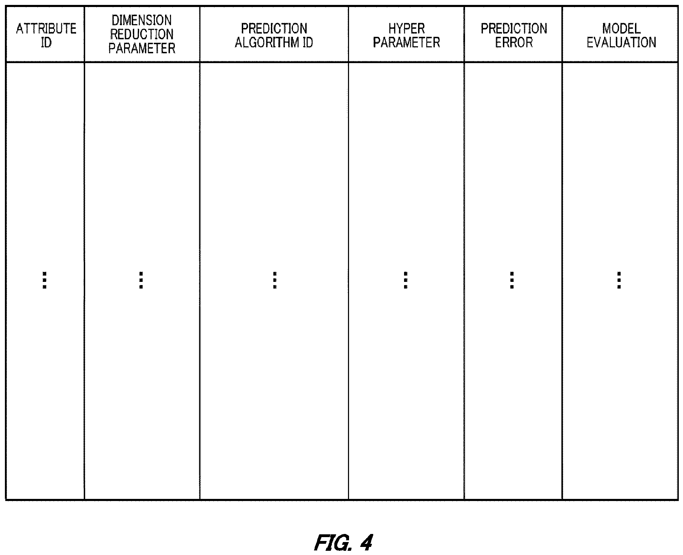

Fig. 4 shows an example of evaluation results of an attribute prediction model generated by the attribute prediction model generating section 180 according to the present embodiment. For each of one or more attribute prediction models generated for each prediction target attribute, the attribute prediction model generating section 180 generates an evaluation result that includes attribute identification information (attribute ID), a dimension reduction parameter, prediction algorithm identification information (prediction algorithm ID), a hyper parameter, a prediction error, and a model evaluation.

The "attribute ID" is identification information of a prediction target attribute of the prediction target. The "dimension reduction parameter" is a parameter, such as the number of topics, used by the dimension reducing section 125 and the dimension reducing section 170 for dimension reduction. If there are a plurality of dimension reduction parameters, the attribute prediction model generating section 180 records a setting value for each parameter. The dimension reduction parameter can also be one type of hyper parameter.

The "prediction algorithm ID" is identification information identifying the prediction algorithm selected for this entry. The "hyper parameter" indicates a setting value of each hyper parameter in the selected prediction algorithm. The "prediction error" indicates the prediction error of the attribute prediction model generated using the dimension reduction parameter, prediction algorithm, and hyper parameter designated in this entry. The "model evaluation" indicates an evaluation result of the attribute prediction model generated corresponding to this entry. Here, in a case where the attribute prediction model is evaluated based only on the prediction error, the attribute prediction model generating section 180 does not need a separate column for the "model evaluation".

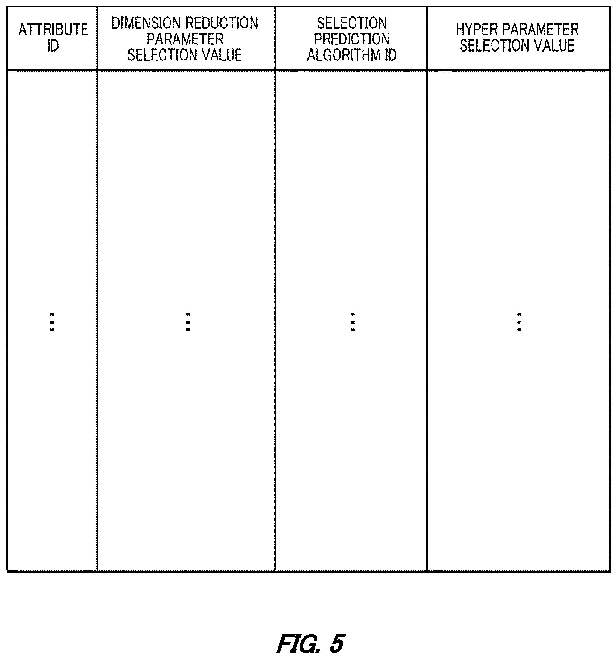

Fig. 5 shows an example of a selection result of an attribute prediction model generated by the attribute prediction model selecting section 185 according to the present embodiment. The attribute prediction model selecting section 185 selects, for each prediction target attribute, an attribute prediction model to be used to predict the attribute value, using the evaluation results of each attribute prediction model generated by the attribute prediction model generating section 180. The attribute prediction model selecting section 185 generates, for each prediction target attribute of the prediction target, a selection result including the attribute ID, a dimension reduction parameter selection value, a selected prediction algorithm ID, and a hyper parameter selection value.

The "attribute ID" is identification information of the prediction target attribute corresponding to this entry. The "dimension reduction parameter selection value" includes a setting value of each of one or more dimension reduction parameters used to predict the prediction target attribute corresponding to this entry. The "dimension reduction parameter selection value" corresponds to the dimension reduction parameter of the selected attribute prediction model in Fig. 4. The "selected prediction algorithm ID" is identification information identifying the prediction algorithm to be used to predict the prediction target attribute corresponding to this entry. The "selected prediction algorithm ID" corresponds to the prediction algorithm ID of the selected attribute prediction model in Fig. 4. The "hyper parameter selection value" is a setting value of each hyper parameter provided to the prediction algorithm to be used to predict the prediction target attribute corresponding to this entry. The "hyper parameter selection value" corresponds to the hyper parameter of the selected attribute prediction model in Fig. 4.

The attribute prediction model selecting section 185 can set for the attribute predicting section 135 the dimension reduction parameter, prediction algorithm, and hyper parameter to be used for prediction, for each prediction target attribute, by supplying the attribute predicting section 135 with the selection results of the attribute prediction model of each prediction target attribute. The attribute prediction model selecting section 185 may supply the attribute predicting section 135 with the prediction error and/or the evaluation result of the selected attribute prediction model.

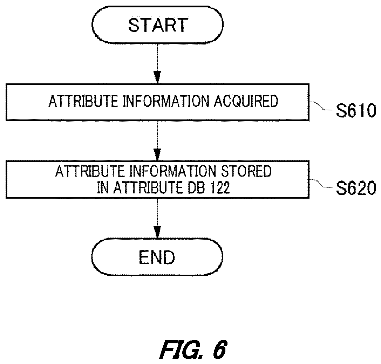

Fig. 6 shows the attribute information acquisition flow of the attribute predicting apparatus 110 according to the present embodiment. At S610, the attribute information acquiring section 115 acquires the attribute information of a target person. At S620, the attribute information acquiring section 115 writes the acquired attribute information to the attribute DB 122, via the attribute DB connecting section 120.

In a case where the attribute DB 122 independently stores the known attribute values and the prediction values for an attribute that is a writing target, the attribute information acquiring section 115 may write the acquired attribute information to the attribute DB 122 as a known attribute value. Furthermore, in a case where the attribute DB 122 and the attribute DB 167 store known attribute values in the same expression format as the prediction values for an attribute that is a writing target, the attribute information acquiring section 115 converts the raw data of the acquired attribute information into the same expression format as the prediction values, and stores the converted data in the attribute DB 122.

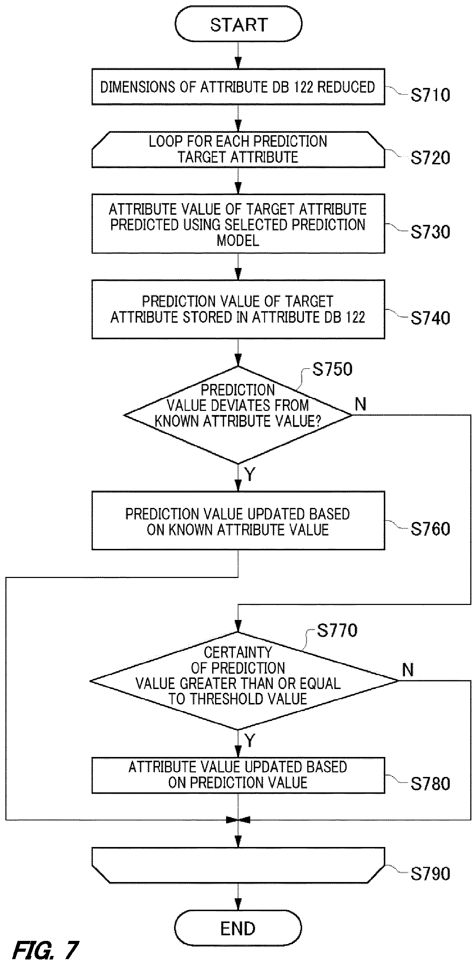

Fig. 7 shows an attribute prediction flow of the attribute predicting apparatus 110 according to the present embodiment. At step S710, in the same manner as the sampling section 160, the dimension reducing section 125 reduces the dimensions of the attribute DB 122 using a topic model such as latent Dirichlet allocation or probabilistic latent semantic analysis, for example. Here, the dimension reducing section 125 references the dimension reduction parameter selection value corresponding to the attribute prediction model selected for each prediction target attribute, and stores in the reduction DB 132 the attribute for dimension reduction corresponding to the dimension reduction parameter selection value designated for at least one prediction target attribute. Furthermore, the dimension reducing section 125 copies, as an attribute of the reduction DB 132, an attribute to be used as an explanatory variable in at least one attribute prediction model selected by the attribute prediction model selecting section 185, from among the plurality of attributes in the attribute DB 122.

The attribute predicting apparatus 110 repeats the processing between S720 and S790 (S730 to S780) for each prediction target attribute (S720 and S790).

At S730, the attribute predicting section 135 predicts the attribute value of the prediction target attribute, using the attribute prediction model selected for the prediction target attribute by the attribute prediction model selecting section 185. The attribute predicting section 135 acquires the attribute values, included in the attribute information stored in the reduction DB 132 for each target person, the prediction value of the attributes corresponding to explanatory variables of the attribute prediction model, via the reduction DB connecting section 130 and inputs these attribute values to the attribute prediction model to calculate the attribute value of the prediction target attribute. Here, for a second attribute prediction model that predicts the prediction value of a second prediction target attribute that is a prediction target attribute using the prediction value of a first prediction target attribute generated by a first attribute prediction model, the attribute predicting section 135 inputs the prediction value of this first prediction target attribute, as the attribute values of the first prediction target attribute being explanatory variables, to the second attribute prediction model to further predict the second prediction target attribute for each of the plurality of target people using the second attribute prediction model.

Furthermore, in a case where the prediction value and the known attribute value for the first prediction target attribute are expressed with the same expression format, or a case where one of these is capable of being converted into the other, for each of the plurality of target people, the attribute predicting section 135 may predict the prediction value of the second prediction target attribute of the target person using the known attribute value on a condition that the attribute value of the first prediction target attribute is known, and predict the prediction value of the second prediction target attribute of the target person using the attribute value of the first prediction target attribute on a condition that the attribute value of the first prediction target attribute is unknown. In this way, the attribute predicting section 135 can make the prediction for a target person for whom the first prediction target attribute is unknown, while predicting the second prediction target attribute with a higher accuracy using the known attribute value for a target person for whom the first prediction target attribute, which was a prediction target for the first attribute prediction model, is known.

At S740, the attribute predicting section 135 stores the prediction value of the prediction target attribute in the attribute DB 122, via the attribute DB connecting section 120. Here, in a case where the prediction value of the prediction target attribute was able to be calculated, the attribute predicting section 135 may store the prediction value in the attribute DB 122 even if the known attribute value of the prediction target attribute is stored in the attribute DB 122.

At S750, if the attribute value of the prediction target attribute for one or more target people among the plurality of target people registered in the attribute DB 122 is known, the attribute prediction value updating section 142 judges whether the prediction value of the prediction target attribute deviates from the known attribute value by a reference amount or more. This reference amount may be determined by a designer, system builder, user, and/or manager of the system 100, or may be calculated by the attribute prediction value updating section 142 by multiplying the variance or standard deviation of the known attribute value of the prediction target attribute by a constant.

In response to the prediction value of the prediction target attribute deviating from the known attribute value by the reference amount or more (Yes at S750), the attribute prediction value updating section 142 may update the prediction value of the prediction target attribute based on the known attribute value (S760). That is, if the prediction value and the known attribute value of the prediction target attribute have the same expression format, the attribute prediction value updating section 142 may replace the prediction value of the prediction target attribute with the known attribute value. If the prediction value and the known attribute value of the prediction target attribute have different expression formats, the attribute prediction value updating section 142 may convert the expression format of the known attribute value and replace the prediction value of the prediction target attribute with this converted known attribute value. Here, the reference amount used to judge the deviation may be set in advance by the designer, system builder, user, manager, and/or the like of the system 100.

In this way, for a target person for whom the attribute value of the prediction target attribute is known, the attribute prediction value updating section 142 can prevent another attribute prediction model that uses this prediction target attribute as an explanatory variable from predicting another prediction target attribute using a prediction value that is significantly incorrect. For example, even in a case where "married" has been incorrectly predicted for a certain target person, if it is known that this target person is actually "unmarried", the attribute prediction value updating section 142 can update the prediction value to "unmarried" and increase the prediction accuracy of other attributes that are to be predicted using this attribute as an explanatory variable.

Furthermore, on a condition that the certainty of the prediction of the prediction value of the prediction target attribute is greater than or equal to a threshold value (Yes at S770), the attribute value updating section 140 may update the attribute value of the prediction target attribute based on the prediction value of the prediction target attribute (S780). Here, if the prediction value and the known attribute value of the prediction target attribute have the same expression format, the attribute value updating section 140 may replace the known attribute value of the prediction target attribute with the prediction value. If the prediction value and the known attribute value of the prediction target attribute have different expression formats, the attribute value updating section 140 may convert the expression format of the known attribute value and replace the prediction value of the prediction target attribute with this converted known attribute value. Here, the threshold value used to judge the certainty of the prediction may be set in advance by the designer, system builder, user, manager, and/or the like of the system 100.

In this way, for a target person for whom the attribute value of the prediction target attribute is known, the attribute value updating section 140 can replace the known attribute value based on the prediction value in response to the prediction value of the prediction target attribute being sufficiently certain, to adapt to situations such as a case where the acquisition timing of the attribute value is old and a case where the situation of the target person has changed. As a result, as an example, it is possible to prevent situations such as a "no children" attribute being maintained for a target person who has purchased diapers and a "no vehicle" attribute being maintained for a target person who has frequently purchased gasoline.

Here, the attribute value updating section 140 may use, as the certainty of the prediction, the AUC (Area Under the Curve) based on the prediction values of all of the target people for whom the prediction target attribute is known, all of the target people included in the learning attribute information, or all of the target people included in the learning attribute information for cross-validation. As an example, for each target person on the horizontal axis of a graph in which each target person for whom the prediction target attribute is known is arranged on the horizontal axis in order from the highest prediction value, the attribute value updating section 140 calculates the AUC to be the area under an ROC curve (Receiver Operating Characteristic curve) obtained by plotting the percentage of target people that satisfy the prediction target attribute among all of the target people for whom the prediction value is greater than this target person. At this time, the attribute value updating section 140 may normalize the maximum value of the AUC to be 1, by also normalizing the horizontal axis of the ROC curve to be 1. Instead, the attribute value updating section 140 may use the value of a parameter that increases as the prediction error decreases, in the manner of (Constant - Prediction Error), as the certainty of the prediction.

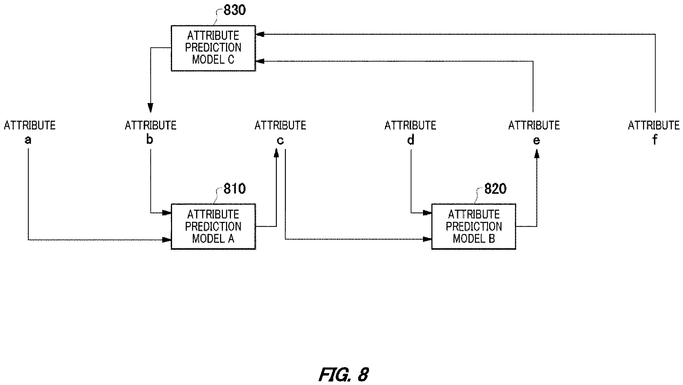

Fig. 8 shows an example of a dependency relationship of prediction target attributes. The attribute prediction model A 810 predicts the attribute value of a prediction target attribute "c" based on the attribute value of an attribute "a" and the attribute value of an attribute "b". The attribute prediction model B 820 predicts the attribute value of a prediction target attribute "e" based on the attribute value of the attribute "c" and the attribute value of an attribute "d". The attribute prediction model C 830 predicts the attribute value of the prediction target attribute "b" based on the attribute value of the attribute "e" and the attribute value of an attribute "f".

In this example, the attribute prediction model A 810 has the attribute value of the attribute "b" input thereto and outputs the attribute value of the attribute "c", the attribute prediction model B 820 has the attribute value of the attribute "c" input thereto and outputs the attribute value of the attribute "e", and attribute prediction model C 830 has the attribute value of the attribute "e" input thereto and outputs the attribute value of the attribute "b". Accordingly, in the chain of explanatory variables and objective variables in the plurality of attribute prediction models, there is a circular dependency among two or more prediction target attributes, namely attribute "b" → attribute "c" → attribute "e" → attribute "b".

Here, if the known attribute value of the attribute "c" is set as an explanatory variable and the prediction value of the attribute "c" is not set as an explanatory variable in the attribute prediction model B 820, for example, the attribute prediction model generating section 180, the attribute prediction model selecting section 185, and/or the attribute predicting section 135 can eliminate the circular dependency among the prediction target attributes because the prediction value of the attribute "c" output by the attribute prediction model A 810 is not input to the attribute prediction model B 820. That is, in a case where there is a circular dependency for the input/output relationship of attribute prediction models among two or more prediction target attributes, the attribute prediction model generating section 180, the attribute prediction model selecting section 185, and/or the attribute predicting section 135 should generate or select attribute prediction models such that a known attribute value is input as the attribute value of an attribute included in the circular dependency in at least one of the attribute prediction models forming the circular dependency.

However, in a case where a known attribute value is to be input, the attribute predicting section 135 becomes unable to predict the attribute value of the prediction target attribute for a target person for whom there is no known attribute value, or the prediction accuracy of this prediction is reduced. Therefore, the attribute predicting section 135 can also adopt a configuration that allows for a circular dependency among two or more prediction target attributes.

In this case, in response to there being a circular dependency among two or more prediction target attributes, the attribute predicting section 135 may determine the prediction order of the two or more prediction target attributes based on at least one of the certainty of the prediction of another prediction target attribute being used for the prediction of each of the two or more prediction target attributes and the contribution of another prediction target attribute to each of the two or more prediction target attributes. For example, if the order of the certainties of the prediction in the example of the present drawing from the highest certainty is attribute "c", attribute "b", and attribute "e", the attribute predicting section 135 may determine the prediction order such that the attribute prediction model B 820, into which is input the attribute "c" having the highest prediction accuracy, is given highest priority and run first. After this, the attribute predicting section 135 may run the attribute prediction models by inputting the attributes thereto in order from the attribute having the highest prediction certainty among the attributes having the circular dependency. Instead, in a case where the attribute prediction model B 820 has been run, the attribute predicting section 135 may run the attribute prediction models in order of dependency among the prediction target attributes after the attribute prediction model B 820, namely an order of the attribute prediction model C 830 into which is input the prediction value output by the attribute prediction model B 820 followed by the attribute prediction model A 810 into which is input the prediction value output by the attribute prediction model C 830. In this way, the attribute predicting section 135 can sequentially predict the prediction values of prediction target attributes that are depended on by giving priority to using prediction values assumed to have high prediction certainty and to be closer to the actual attribute values, and more quickly increase the accuracy of the prediction values.

As another example, in the example of the present drawing, if the contribution of the attribute "c" to the prediction of the prediction target attribute "e", the contribution of the attribute "b" to the prediction of the prediction target attribute "c", and the contribution of the attribute "e" to the prediction of the prediction target attribute "b", the attribute predicting section 135 may determine the prediction order such that the attribute prediction model C 830, into which the attribute "e" having the lowest contribution is input, is given highest priority and run first. After this, the attribute predicting section 135 may run the attribute prediction models by inputting the attributes thereto in order from the attribute having the lowest contribution to the prediction of the next prediction target attribute of the attribute prediction model among the attributes having the circular dependency. Instead, in a case where the attribute prediction model C 830 has been run, the attribute predicting section 135 may run the attribute prediction models in order of dependency among the prediction target attributes after the attribute prediction model C 830, namely an order of the attribute prediction model A 810 into which is input the prediction value output by the attribute prediction model C 830 followed by the attribute prediction model B 820 into which is input the prediction value output by the attribute prediction model A 810. In this way, the attribute predicting section 135 can sequentially predict the prediction values of prediction target attributes that are depended on by giving priority to using prediction values having a low contribution affecting the prediction of later-stage attribute prediction models and having little chance of affecting the circular dependency, and more quickly attenuate the effect of the circular dependency of the prediction values.

The attribute predicting section 135 may determine the prediction order of two or more prediction target attributes based on both the certainty of the prediction of another prediction target attribute to be used in the prediction of each of two or more prediction target attributes and the contribution of the other prediction target attribute to each of the two or more prediction target attributes, or may determine the prediction order while further taking other conditions into consideration. Here, in a case where the certainty of the prediction of an attribute to be used for prediction is higher or the contribution of an attribute to a prediction is lower for an attribute included in the circular dependency, the attribute predicting section 135 gives more priority to running an attribute prediction model into which this attribute is input. As an example, the attribute predicting section 135 may determine the priority according to a weighted sum of the prediction certainty (or prediction uncertainty) of the attribute to be used for prediction and the contribution of the attribute to the prediction.

As another example, for each of two or more prediction target attributes, the attribute predicting section 135 may determine the prediction order of the prediction values of the two or more prediction target attributes based on the product-sum of the prediction uncertainty of another prediction target attribute and the contribution of the other prediction target attribute. That is, as an example, for each of the plurality of attribute prediction models (attribute prediction model A 810, attribute prediction model B 820, attribute prediction model C 830, and the like), the attribute predicting section 135 obtains the product-sum of the uncertainty of each input attribute and the contribution of each input attribute included in the circular dependency and gives more priority to running attribute prediction models having smaller product-sum values.

The attribute predicting section 135 may use the value of a parameter that decreases as the prediction certainty increases, as the prediction uncertainty. For example, the attribute predicting section 135 may use a value obtained by subtracting the prediction certainty based on the AUC normalized to a maximum of 1 from a value of 1, as in (1-AUC).

As shown above, by setting a more suitable order for the prediction order among the prediction target attributes included in the circular dependency, the attribute predicting section 135 can more quickly increase the accuracy of the prediction values and/or more quickly converge the prediction values among two or more prediction target attributes calculated circularly. In this way, in a case where the running period of each attribute prediction model is long due to the attribute DB 122 and the attribute DB 167 including many attributes, it is possible to more quickly optimize the prediction values.

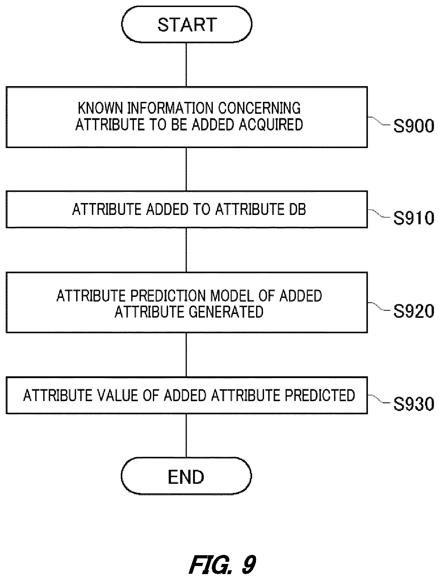

Fig. 9 shows an attribute addition flow of the system 100 according to the present embodiment. At S900, the attribute data acquiring section 144 acquires the known information indicating the known attribute values of additional attributes to be added to an attribute database, for at least some of the plurality of target people. For example, in order to make it possible for an end user or the like of the system 100, such as a person in charge of marketing, to easily predict any characteristic of each target person, the terminal 112 provides a user interface to easily add an attribute to the attribute DB 122 and calculate the prediction value of this attribute for each target person. As an example, the terminal 112 may provide a user interface that, in response to known information being dragged and dropped onto an icon of an application provided by this user interface, performs at least some of adding the attribute corresponding to this known information, setting a known attribute value, and generating and/or selecting an attribute prediction model.

The known information acquired by the attribute data acquiring section 144 may be information including a group of individual identification information and known attribute values of one or more additional attributes, for each of at least some of the plurality of target people. Furthermore, in a case where an additional attribute is a binary value attribute indicating the presence or lack of a specific feature of a target person (e.g. "whether product A was purchased"), the known information may include at least one of a list of the individual identification information of each target person for which the additional attribute is true and a list of the individual identification information of each target person for which the additional attribute is false.

At S910, the attribute adding section 146 adds the additional attribute to the plurality of attributes in the attribute DB 122. For example, the attribute adding section 146 adds a column for the additional attribute to the attribute DB 122 via the attribute DB connecting section 120, and sets known attribute values to be stored for the additional attribute in the attribute DB 122 based on known attribute values of each target person included in the known information. At this time, the attribute adding section 146 may set a known attribute value indicated by the known information as a known attribute value of the additional attribute in the attribute DB 122, or may convert the known attribute value indicated by the known information into the expression format of the attribute DB 122 and set the converted known attribute value as the known attribute value of the additional attribute.

At S920, the prediction model generating apparatus 150 in the system 100 generates one or more attribute prediction models having the additional attribute as a prediction target attribute. Here, in response to an additional attribute being added to the attribute DB 122 by the attribute data acquiring section 144, the model update instructing section 155 may promptly issue instructions to generate an attribute prediction model of the additional attribute without waiting for the predetermined time period to pass. The process for generating the one or more attribute prediction models having an additional attribute as a prediction target attribute may be the same as the process of S320 to S350 in the operational flow of Fig. 3.

At S930, the prediction model generating apparatus 150 in the system 100 selects the attribute prediction model to be used to predict the attribute value of the prediction target attribute that is an additional attribute, based on the prediction error of each of the plurality of attribute prediction models. The process for selecting the attribute prediction model to be used to predict the attribute value of the additional value of the additional attribute from among the plurality of attribute prediction models may be the same as the process of S360 to S370 of Fig. 3.

After the process shown above, the attribute predicting apparatus 110 in the system 100 may predict the attribute value of the additional attribute for each target person or all of the target people, by executing the attribute prediction flow shown in Fig. 7. In this way, the system 100 can learn the attribute prediction model for predicting the attribute value of the additional attribute, with known attribute values for some of the target people included in the known information serving as teacher data, and can calculate the prediction value of the additional attribute for other target people or for all of the target people.

In the present embodiment, the attribute data acquiring section 144 and the attribute adding section 146 are provided within the attribute predicting apparatus 110 and add the additional attributes to the attribute DB 122, which is the master. Instead, an aspect may be provided in which the attribute data acquiring section 144 and the attribute adding section 146 are provided within the prediction model generating apparatus 150 and add the additional attributes to the attribute DB 167, which is a subset.

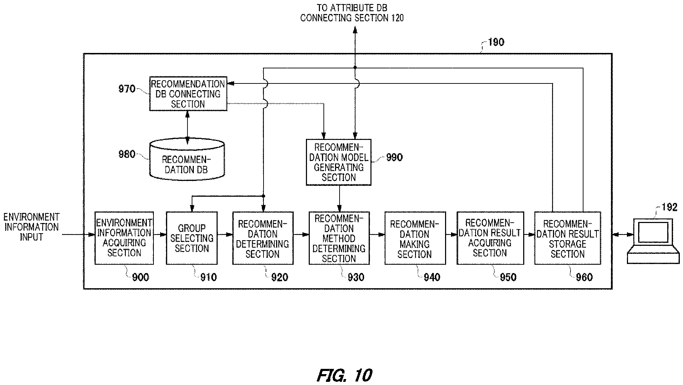

Fig. 10 shows a configuration of a recommendation processing apparatus 190 according to the present embodiment, along with the terminal 192. The recommendation processing apparatus 190 includes an environment information acquiring section 900, a group selecting section 910, a recommendation determining section 920, a recommendation method determining section 930, a recommendation making section 940, a recommendation result acquiring section 950, a recommendation result storage section 960, a recommendation DB connecting section 970, a recommendation DB 980, and a recommendation model generating section 990.

The environment information acquiring section 900 acquires environment information indicating an environment in which a recommendation target person is located, among the plurality of target people registered in the system 100. As an example, the environment information acquiring section 900 acquires, as the environment information, at least one of position information indicating a position or location of the recommendation target person; weather information such as the weather, climate, temperature, and/or humidity at the position or location of the recommendation target person; and activity information indicating an activity (currently shopping, travelling, commuting, working, or the like) of the target person.

The group selecting section 910 selects a group to be recommended from among a plurality of groups of products or the like, based on the environment information for the recommendation target person that has been acquired by the environment information acquiring section 900. As an example, the group selecting section 910 stores one or more sets that each include an environmental condition that is a condition for the environment information and a group of products or the like to be recommended for this environment condition and, when the environment information acquired by the environment information acquiring section 900 fulfills a certain environment condition, selects the group of the products or the like associated with this environment condition as a recommendation target. For example, in a case where the recommendation target person is positioned within a reference distance from a store, the group selecting section 910 may select a group of products or the like handled by this store as the group that is a recommendation target. As another example, the group selecting section 910 may make the selection while giving more priority to groups associated with stores closer to the current position of the recommendation target person, among a plurality of stores affiliated with a member service provided by the system 100, from among the plurality of groups. As yet another example, in a case where the temperature at the position or location of the recommendation target person is higher than or equal to a reference temperature, the group selecting section 910 may select a group of products of a café closest to the target person from among stores affiliated with soft drinks, frozen sweets, and/or services, as the recommendation target. The recommendation processing apparatus 190 may adopt a configuration in which the group selecting section 910 is not included and the recommendation target products or the like are selected from among any products or the like to be the recommendation target.

The group selecting section 910 may select a group to be recommended from among a plurality of groups of products or the like, further based on the most recent date and time that the recommendation target person used each of the plurality of stores or on a time period that has passed from the last time that the recommendation target person used each of the plurality of stores. For example, in a case where a predetermined reference time period or longer has passed from the last time the recommendation target person used the store, this recommendation target person can be treated as having disengaged from this store. In such a case, the group selecting section 910 can provide a recommendation to prevent the customer from disengaging, by selecting a group of products or the like that are handled by this store as recommendation candidates, for example.

The recommendation determining section 920 determines whether to recommend a product or the like based on at least one of the plurality of attribute values stored in the attribute DB 122 for the recommendation target person. As an example, the recommendation determining section 920 references an attribute value (known attribute value or prediction value) of an attribute associated with each product or the like included in the purchasing potential data (or each product or the like designated as being recommendable), in the attribute information of the recommendation target person stored in the attribute DB 122, and if there is an attribute value indicating a preference level greater than or equal to a reference level, sets the product or the like corresponding to this attribute to be the recommendation target product or the like. Instead, the recommendation determining section 920 may select one or more products or the like to be recommendation targets while giving more priority to products or the like corresponding to attribute values indicating higher preference levels among the attribute values (known attribute values or prediction values) of attributes associated with each product or the like included in the purchasing possibility data (or each product or the like designated as being recommendable).

In response to a group of products or the like being selected by the group selecting section 910, the recommendation determining section 920 determines a product or the like to recommend to the recommendation target person from among the products or the like included in the group selected by the group selecting section 910, based on at least one of the plurality of attribute values for the recommendation target person. In this case, the recommendation determining section 920 narrows down the range of products or the like to be selected to be within the range of the selected group, and selects the recommendation target product or the like in the same manner as described above.

The recommendation method determining section 930 determines a recommendation method for recommending the product or the like to the recommendation target person. The recommendation method determining section 930 may determine the recommendation method for recommending the product or the like to the recommendation target person by using a recommendation model generated by the recommendation model generating section 990, which is described further below. Here, the recommendation method determining section 930 may determine the recommendation method for the recommendation target person to be using at least one type of media such as electronic mail, internet advertising, direct mail, printing on receipts issued to the target person, and television advertising. Furthermore, the recommendation method determining section 930 may determine the recommendation method for the recommendation target person to be providing an incentive that is at least one of a discount for the product or the like, an accompanying coupon, and accompanying points.

The recommendation making section 940 recommends the recommendation target product or the like to the recommendation target person using the recommendation method determined by the recommendation method determining section 930. The recommendation result acquiring section 950 acquires a recommendation result of the determined recommendation method for the recommendation target person.

The recommendation result storage section 960 stores the recommendation result of the determined recommendation method in association with at least some of the attributes among the plurality of attributes in the attribute DB 122. For example, the recommendation result storage section 960 stores the recommendation result in association with at least one attribute associated with the recommendation target product or the like, in the purchasing potential data in the attribute information of the recommendation target person stored in the attribute DB 122. In this case, the recommendation result storage section 960 can reflect the recommendation result in the attribute value (known attribute value) of an attribute indicating the preference level for the recommendation target product or the like. Here, the system 100 may adopt a configuration to, in a case where the product or the like that has been set as a recommendation target has been purchased, update the attributes in the purchasing potential data in the attribute DB 122 from the attribute information acquiring section 115 instead of updating from the recommendation result storage section 960.

Furthermore, the recommendation result storage section 960 may store the recommendation result in association with at least one attribute corresponding to the media used in the determined recommendation method, which is included in the media reaction in the recommendation potential data of the recommendation target person stored in the attribute DB 122. In this way, the recommendation result storage section 960 can reflect the recommendation result corresponding to the media used in the determined recommendation method in the attribute values (known attribute values) of attributes indicating the effectiveness of the recommendations using each type of media included in the media reaction.

Furthermore, the recommendation result storage section 960 may store the recommendation result in association with at least one attribute corresponding to the incentive used in the determined recommendation method, which is included in the incentive reaction in the recommendation potential data of the recommendation target person stored in the attribute DB 122. In this way, the recommendation result storage section 960 can reflect the recommendation result corresponding to the incentive used in the determined recommendation method in the attribute values (known attribute values) of attributes indicating the effectiveness of the recommendations providing each incentive included in the incentive reaction.

Furthermore, the recommendation result storage section 960 stores a recommendation history, which includes the content and the recommendation results of the recommendations that were made, in the recommendation DB 980 via the recommendation DB connecting section 970.

The recommendation DB connecting section 970 is connected to the recommendation DB 980, and processes access to the recommendation DB 980 from each section in the system 100. The recommendation DB 980 stores the content and the recommendation results of the recommendations made by the recommendation processing apparatus 190. In the same manner as the attribute DB 122, the recommendation DB 980 may also be realized by an external storage apparatus connected to a computer that executes the processing of the system 100, and may be realized by a storage apparatus outside the system 100 provided by a cloud storage service or the like, for example.

The recommendation model generating section 990 generates a recommendation model for selecting a recommendation method, using the attribute DB 122 that includes the recommendation result of the recommendation method as an attribute value of at least some of the attributes. The recommendation model generating section 990 according to the present embodiment generates the recommendation model using the recommendation DB 980 in addition to the attribute DB 122. Here, instead of using only the attribute DB 122 or in addition to using the attribute DB 122, the recommendation model generating section 990 may use the reduction DB 132 obtained by reducing the dimensions of the attribute DB 122, the attribute DB 167 obtained by sampling the attribute DB 122, or the reduction DB 177 obtained by sampling and reducing the dimensions of the attribute DB 122. Furthermore, the recommendation model generating section 990 may generate the recommendation model further using the recommendation DB 980.

According to the system 100 of the present embodiment, the recommendation result corresponding to the recommendation method used to recommend a product or the like can be stored in the attribute DB 122 or the like as at least one attribute of a target person, and it is possible to generate and update the recommendation model for selecting the recommendation method for later recommendations using the attribute DB 122 or the like that includes this attribute. In this way, as the number of recommendations that have been made increases, the system 100 can make recommendations with a recommendation method more suitable for the target person.

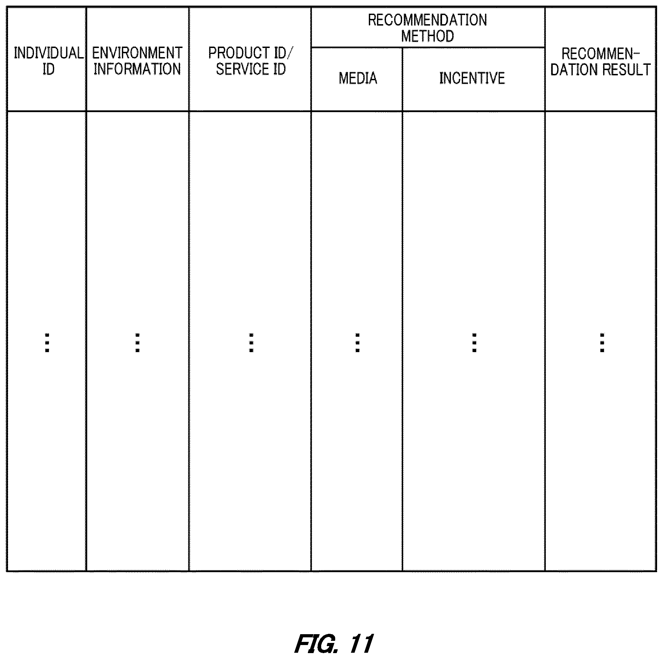

Fig. 11 shows an example of a data structure stored in the recommendation DB 980 according to the present embodiment. The recommendation DB 980 stores an individual ID, the environment information, a product ID/service ID, a recommendation method, and a recommendation result in correspondence with each recommendation made by the recommendation processing apparatus 190.

The "individual ID" identifies the recommendation target person. The "environment information" is environment information for the recommendation target person, acquired by the environment information acquiring section 900 for this recommendation. The "product ID/service ID" is identification information of the recommended product or the like.

The "recommendation method" is the recommendation method selected by the recommendation method determining section 930 and used by the recommendation making section 940, and includes the media used for the recommendation and the incentive accompanying the recommendation. The "recommendation result" may indicate the activity of the recommendation target person in response to the recommendation, and may store, in addition to the purchase of the recommendation target product or the like, at least one of a reaction to electronic mail or direct mail including advertisements for the recommendation target product or the like (opening electronic mail, clicking advertisement links in electronic mail, replying to electronic mail or direct mail, making inquiries, and the like), a reaction to internet advertisements (clicking on internet advertisements and the like), a reaction to television commercials (making inquiries, interacting in the case of interactive commercials, and the like), and other reactions (visiting stores and the like), for example. Here, the "recommendation result" may include a column corresponding to each of a plurality of types of reactions.

The recommendation DB 980 may store the date, date and time, or the like at which a recommendation was made. Furthermore, the recommendation DB 980 may store a copy of at least some of the attribute information of the recommendation target person stored in the attribute DB 122 and the like, in addition to or instead of storing the individual ID. As an example, the recommendation DB 980 may store a copy of the general attribute data of the recommendation target person and, in addition to or instead of this, may store the attribute value of at least one attribute stored in association with the recommendation target product or the like in the purchasing potential data. According to this embodiment, the amount of data stored in the recommendation DB 980 is increased, but the recommendation processing apparatus 190 can store the attribute information of the recommendation target person used to determine the recommendation and/or to determine the recommendation method, and can generate the recommendation model using the pre-updated attribute information even after the attribute DB 122 has been updated.

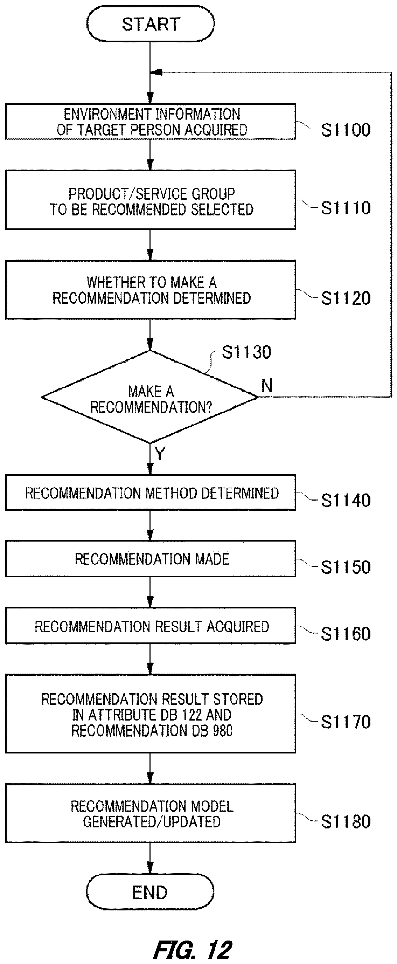

Fig. 12 shows a recommendation process flow of the recommendation processing apparatus 190 according to the present embodiment. At S1100, the environment information acquiring section 900 acquires the environment information for a certain target person (recommendation target person) among the plurality of target people registered in the system 100. As an example, the environment information acquiring section 900 receives the environment information from an application for a member service installed and executed on a portable terminal such as a portable telephone or smartphone carried by the recommendation target person. Furthermore, in response to receiving the environment information such as weather information for a certain region, the environment information acquiring section 900 may search the attribute DB 122 and the like for each target person positioned in this region and/or each target person having an address in this region, and set these target people as recommendation target people.

At S1110, the group selecting section 910 selects the group to be recommended from among the plurality of groups of products or the like, based on the environment information for a recommendation target person. At S1120, the recommendation determining section 920 determines whether to recommend a product or the like based on at least one of the plurality of attribute values stored in the attribute DB 122, for the recommendation target person. If it is determined that a product or the like is not to be recommended, at S1130, the recommendation determining section 920 returns the processing to S1100.

If it is determined that a product or the like is to be recommended, the recommendation method determining section 930 determines the recommendation method for recommending the product or the like to the recommendation target person. Here, the recommendation method determining section 930 may determine the recommendation method further based on the environment information for the recommendation target person. For example, the recommendation method determining section 930 may input the recommendation target product or the like and at least some of the environment information and the attribute information for the recommendation target person into the recommendation model, and determine the recommendation method using this recommendation model. Here, the recommendation method determining section 930 may not only attempt to exploit the learning results by always determining the recommendation method using the recommendation model, but also attempt to explore other recommendation methods by determining recommendation methods randomly with a predesignated ratio, selecting a recommendation method that is second best or lower, or the like.

At S1150, the recommendation making section 940 makes a recommendation to the recommendation target person using the determined recommendation method. The recommendation making section 940 may use the media corresponding to the determined recommendation method to perform at least part of a recommendation process such as transmitting an electronic mail making a recommendation to the electronic mail address of the recommendation target person, providing an internet advertisement to an advertisement link included in a web page being displayed by the recommended target person, outputting a recipient list or addresses including the address of each recommendation target person, issuing instructions for printing an advertisement onto a receipt in response to receiving a purchasing transaction that accompanies the purchase of a product or the like by the recommendation target person, issuing instructions for distribution of an advertisement for the recommendation target product or the like to a server of the like of a television or CATV business, and the like.

At S1160, the recommendation result acquiring section 950 acquires the recommendation result of the recommendation made to the recommendation target person. The recommendation result acquiring section 950 acquires information that the recommendation target person has purchased a recommendation target product or the like, an opening confirmation message for a recommendation made by electronic mail has been received, an advertisement link or the like in an electronic mail has been clicked, an internet advertisement has been clicked, reception of an inquiry from a recommendation target person who received a direct mail has been registered, a coupon or the like printed on a receipt has been used, and/or there has been an interaction with a television advertisement or the like.

At S1170, the recommendation result storage section 960 reflects the content of the recommendations that were made and the acquired recommendation results in the attribute DB 122, and stores the content and recommendation results in the recommendation DB 980 as the recommendation history.

At S1180, the recommendation model generating section 990 generates the recommendation model for selecting the recommendation method, using the attribute DB 122 and the recommendation DB 980. Here, the recommendation model generating section 990 may generate or update the recommendation model every time a recommendation result is acquired, or may instead generate or update the recommendation model periodically or every time recommendation results are acquired a predetermined number of times.

The recommendation model generating section 990 may adopt an algorithm selected in advance from among various types of machine learning algorithms including random forest, gradient boosting, logistic regression, neural networks, support vector machines (SVMs), and the like, for example, and may set an algorithm and a hyper parameter as targets for optimization, in the same manner as the attribute prediction model generating section 180 and the attribute prediction model selecting section 185.

The recommendation model generating section 990 causes the recommendation model, for which the attribute information and the environment information of the target person is the input and a success rate, success possibility, deviation of the success possibility, or the like of each recommendation method (each type of media, each incentive) is the output, to perform learning using the recommendation history stored in the recommendation DB 980. In this learning, the recommendation model generating section 990 may perform a learning process in a manner to reflect the recommendation cost (advertising cost, incentive cost, and the like). For example, since a recommendation providing an incentive has a higher cost than a recommendation that does not provide an incentive, the recommendation model generating section 990 may cause the recommendation model to perform the learning such that the success rate for a recommendation that provides an incentive is reduced by a ratio corresponding to the cost (reduced uniformly, reduced by the ratio of the cost to the value of the product or the like, or the like). Here, the recommendation model may be formed by combining inference models, which have the attribute information and the environment information as input and the success rate of any one recommendation method as output, for all of the recommendation methods.

As an example, the recommendation model generating section 990 causes the recommendation model to be learned by extracting a recommendation history for learning from the recommendation history stored in the recommendation DB 980, inputting the attribute information and the environment information of the target person corresponding to the extracted recommendation history to the recommendation model, calculating the difference between the recommendation result and an inference value (success rate or the like) output by the recommendation model, and repeating a process of updating a parameter of the recommendation model in a manner to reduce the difference. The recommendation model generating section 990 may be capable of performing online learning that includes updating the recommendation model using newly acquired recommendation results, and of making recommendations with the recommendation processing apparatus 190 during the learning. The recommendation model generating section 990 provides the generated and/or updated recommendation model to the recommendation method determining section 930.

According to the system 100 described above, it is possible to generate and/or update a recommendation model based on a result of making a recommendation to the target person, and to determine the recommendation method for recommending a product or the like to the same target person or a different target person, using this recommendation model. In this way, the system 100 can continually increase the recommendation accuracy.

In addition to the recommendation flow corresponding to the environment information shown above, the recommendation processing apparatus 190 can also perform a bloc recommendation process capable of being designated by a user, manager, and/or the like of the system 100. The recommendation processing apparatus 190 receives a designation of a narrowing-down condition for the recommended target people via the terminal 192, and displays in the terminal 192 the number or the like of the recommendation target people who fulfill this narrowing-down condition. Here, the narrowing-down condition nay be designated by a range of attribute values of one or more attributes, such as "annual salary in the top 20%, male, aged 40 to 50", for example. Furthermore, the narrowing-down condition may include a designation of extracting a number of designated people starting from the highest or lowest attribute value of one or more attributes, such as "X people having the highest preference level (or purchasing possibility) for product A", for example.

The user or the like of the system 100 determines the narrowing-down condition to be used for a recommendation by manipulating the terminal 192 to set and/or adjust the narrowing-down condition. Furthermore, the user or the like of the system 100 designates the recommendation method as needed. The recommendation processing apparatus 190 receives a recommendation execution instruction via the terminal 192, makes the recommendation to each target person having been narrowed-down by the narrowing-down condition in the same manner as in S 1150 to S 1180 of Fig. 12, acquires the recommendation results, reflects the recommendation results in the databases (DBs), and updates the recommendation model.

Here, in a case where no specific recommendation method is designated, the recommendation processing apparatus 190 may perform the process of S1140 to determine the recommendation method suitable for each target person. Here, the recommendation method determining section 930 may determine different recommendation methods for each portion of target people among the plurality of target people. In this way, the recommendation processing apparatus 190 can use a plurality of different recommendation methods and use these recommendation results to assist with the learning of the recommendation model.

As a modification of the system 100 according to the present embodiment, a configuration can be adopted in which, instead of the recommendation model generating section 990 generating the recommendation model, the prediction model generating apparatus 150 is made to function as a recommendation model generating section, and the prediction model generating apparatus 150 generates the recommendation model as one type of attribute prediction model. In this case, as an example, the attribute DB 122 stores at least one attribute for each recommendation in correspondence with each of a plurality of types of environment information, as the recommendation potential data. According to recommendation results corresponding to the environment information and recommendation method, the recommendation result storage section 960 updates the known attribute values of these attributes in the attribute DB 122. The prediction model generating apparatus 150, based on the attribute information of a target person, generates the recommendation model for predicting these attributes in the recommendation potential data, as one type of attribute prediction model. The recommendation method determining section 930 may determine the optimal recommendation method by making the selection while prioritizing recommendation methods corresponding to attributes including prediction values indicating higher success rates, based on the prediction values of these attributes predicted by the recommendation model.

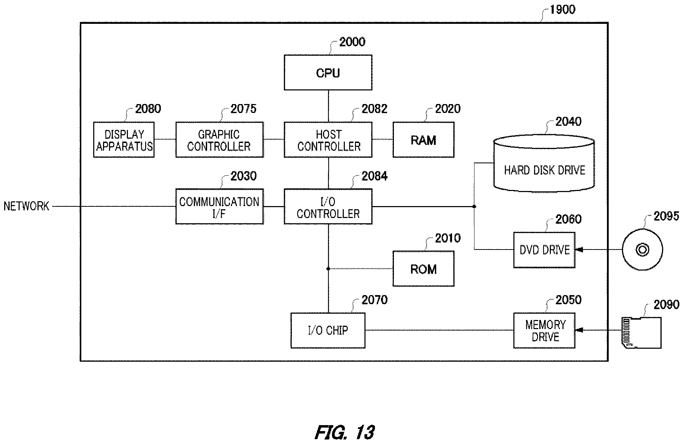

Fig. 13 shows an example of a computer 1900 in which a plurality of aspects of the present invention may be wholly or partly embodied. A program that is installed in the computer 1900 can cause the computer 1900 to function as or perform operations associated with apparatuses of the embodiments of the present invention or one or more sections thereof, or perform the operations or the one or more sections, and/or cause the computer 1900 to perform processes of the embodiments of the present invention or steps of the processes. Such a program may be executed by a CPU 2000 to cause the computer 1900 to perform certain operations associated with some or all of the blocks of flowcharts and block diagrams described herein.

The computer 1900 according to the present embodiment includes a CPU peripheral section including a CPU 2000, a RAM 2020, a graphic controller 2075, and a display apparatus 2080 that are connected to each other by a host controller 2082; an input/output section including a communication interface 2030, a hard disk drive 2040, and a DVD drive 2060 that are connected to the host control 2082 by an input/output controller 2084; and a legacy input/output section that includes a ROM 2010, a flash memory drive 2050, and an input/output chip 2070 that are connected to the input/output controller 2084.

The host controller 2082 is connected to the RAM 2020 and to the CPU 2000 and graphic controller 2075 that access the RAM 2020 with a high transfer rate. The CPU 2000 operates based on programs stored in the ROM 2010 and the RAM 2020, to control each section. The graphic controller 2075 obtains image data generated by the CPU 2000 or the like on a frame buffer provided in the RAM 2020, and causes the image data to be displayed on the display apparatus 2080. Instead, the graphic controller 2075 may include therein a frame buffer that stores the image data generated by the CPU 2000 or the like.

The input/output host controller 2084 connects the host controller 2082 to the communication interface 2030, the hard disk drive 2040, and a DVD drive 2060, which are relatively high-speed input/output apparatuses. The communication interface 2030 communicates with other apparatuses via a network, either wirelessly or in a wired manner. Furthermore, the communication interface 2030 functions as hardware for performing communication. The hard disk drive 2040 stores programs and data to be used by the CPU 2000 in the computer 1900. The DVD drive 2060 reads programs and data from a DVD 2095 and provides the hard disk drive 2040 with the read programs and data, via the RAM 2020.

Furthermore, the ROM 2010 and the flash memory 2050 and input/output chip 2070, which are relatively low-speed input/output apparatuses, are connected to the input/output controller 2084. The ROM 2010 stores a boot program executed by the computer 1900 during startup and/or programs and the like that depend on the hardware of the computer 1900. The flash memory drive 2050 reads the programs or data from the flash memory 2090 and provide these programs or data to the hard disk drive 2040 via the RAM 2020. The input/output chip 2070 connects the flash memory drive 2050 to the input/output controller 2084, and also connects various input/output apparatuses to the input/output controller 2084, via parallel ports, serial ports, keyboard ports, mouse ports, and the like.

The programs provided to the hard disk drive 2040 via the RAM 2020 are stored in a storage medium such as the flash memory 2090, the DVD 2095, or an IC card and provided to a user. The programs are read from the storage medium, installed on the hard disk drive 2040 in the computer 1900 via the RAM 2020, and executed by the CPU 2000. The information processes recorded in these programs are read by the computer 1900 and realize collaboration between software and the various types of hardware resources described above. Apparatuses or methods may be configured by realizing the manipulation or processing of information in accordance with the use of the computer 1900.

As an example, when there is communication between the computer 1900 and an external apparatus or the like, the CPU 2000 executes a communication program loaded onto the RAM 2020, and issues instructions for communication processing to the communication interface 2030 based on the processing content recorded in the communication program. The communication interface 2030 is controlled by the CPU 2000 to read transmission data stored in a transmission buffer region or the like provided in a storage apparatus such as the RAM 2020, the hard disk drive 2040, the flash memory 2090, DVD 2095, or the like and to transmit this transmission data via a network, or to write reception data received from the network to a reception buffer region or the like provided in the storage apparatus. In this way, the communication interface 2030 may transfer transmission/reception data to and from the storage apparatus using DMA (direct memory access), or may instead read the data from the communication interface 2030 or the storage apparatus having the CPU 2000 as a transmission source and transmit the transmission/reception data by writing this data to the storage apparatus or the communication interface 2030 that is the transmission destination.

Furthermore, the CPU 2000 reads to the RAM 2020 all or the necessary portions of the file, database, or the like stored in an external storage apparatus such as the hard disk drive 2040, the DVD drive 2060 (DVD 2095), and the flash memory drive 2050 (flash memory 2090), using DMA transmission or the like, and performs various processes on the data in the RAM 2020. The CPU 2000 then writes the processed data back to the external storage apparatus using DMA transmission or the like. In such processing, the RAM 2020 is treated as temporarily holding the content of the external storage apparatus, and therefore, in the present embodiment, the RAM 2020, external storage apparatus, and the like are referred to as memories, storage sections, storage apparatuses, or the like.

The various types of information such as the various types of programs, data, tables, and databases in the present embodiment are stored in such a storage apparatus and become targets of information processing. The CPU 2000 can hold a portion of the RAM 2020 in a cache memory, and performing writing to the cache memory. In such an embodiment as well, the cache memory realizes some of the functions of the RAM 2020, and therefore, in the present embodiment, unless a distinction is made, the cache memory is also assumed to be included among the RAM 2020, the memories, and/or the storage apparatuses.

The CPU 2000 performs various types of processing on the data read from the RAM 2020, including various types of operations, processing of information, condition judging, and searching/replacement of information, as described in the present embodiment and designated by an instruction sequence of programs, and writes the result back to the RAM 2020. For example, in a case where a conditional judgment is performed, the CPU 2000 compares various types of variables shown in the present embodiment to other variables of constants, judges whether a condition, such as these variables being larger, smaller, greater than or equal to, less than or equal to, or equal to the comparison targets is fulfilled, and if this condition is fulfilled (or if this condition is not fulfilled), branches to a different instruction sequence or calls out a sub routine.

The CPU 2000 can search for information stored in a file, a database, or the like in the storage apparatus. For example, when a plurality of entries, each having an attribute value of a second attribute associated with an attribute value of a first attribute, are stored in the storage apparatus, the CPU 2000 can search for an entry matching a condition for which the attribute value of the first attribute is designated, from among a plurality of entries stored in the storage apparatus, and read the attribute value of the second attribute stored in this entry, thereby obtaining the attribute value of the second attribute associated with the first attribute satisfying the predetermined condition.

In a case where a plurality of elements are provided as examples in the description of the embodiments, elements other than those provided as examples may be used. For example, in a case where it is stated that "X performs Y using A, B, and C", X may perform Y using D in addition to A, B, and C.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

100. system
110. attribute predicting apparatus
112. terminal
115. attribute information acquiring section
120. attribute DB connecting section
122. attribute DB
125. dimension reducing section
130. reduction DB connecting section
132. reduction DB
135. attribute predicting section
140. attribute value updating section
142. attribute prediction value updating section
144. attribute data acquiring section
146. attribute adding section
150. prediction model generating apparatus
152. terminal
155. model update instructing section
160. sampling section
165. attribute DB connecting section
167. attribute DB
170. dimension reducing section
175. reduction DB connecting section
177. reduction DB
180. attribute prediction model generating section
185. attribute prediction model selecting section
190. recommendation processing apparatus
192. terminal
810. attribute prediction model A
820. attribute prediction model B
830. attribute prediction model C
900. environment information acquiring section
910. group selecting section
920. recommendation determining section
930. recommendation method determining section
940. recommendation making section
950. recommendation result acquiring section
960. recommendation result storage section
970. recommendation DB connecting section
980. recommendation DB
990. recommendation model generating section
1900. computer
2000. CPU
2010. ROM
2020. RAM
2030. communication interface
2040. hard disk drive
2050. flash memory drive
2060. DVD drive
2070. input/output chip
2075. graphic controller
2080. display apparatus
2082. host controller
2084. input/output controller
2090. flash memory
2095. DVD

## Claims

1. A device comprising:
an attribute database connecting section connected to an attribute database for storing a plurality of attribute values corresponding to a plurality of attributes, for each of a plurality of target people;
a recommendation determining section that, for a first target person among the plurality of target people, determines whether to recommend at least one of a product and a service, based on at least one of the plurality of attribute values;
a recommendation method determining section that determines a recommendation method for recommending at least one of a product and a service to the first target person;
a recommendation result acquiring section that acquires a recommendation result of the recommendation method for the first target person;
a recommendation result storage section that stores the recommendation result of the recommendation method in association with at least some attributes among the plurality of attributes in the attribute database; and
a recommendation model generating section that generates a recommendation model for selecting the recommendation method, using the attribute database that includes the recommendation result of the recommendation method as an attribute value of the at least some of the attributes.

2. The device according to Claim 1, wherein
the recommendation method determining section determines a recommendation method for recommending at least one of a product and a service to a second target person, using the recommendation model.

3. The device according to Claim 2, wherein
the recommendation method determining section determines recommendation methods that are different from each other for each portion of a plurality of first target people, each first target person being the first target person.

4. The device according to Claim 2 or 3, wherein
the recommendation method determining section determines, as the recommendation method for the first target person, using at least one of electronic mail, an internet advertisement, direct mail, printing onto a receipt issued to the first target person, and a television advertisement.

5. The device according to any one of Claims 2 to 4, wherein
the recommendation method determining section determines, as the recommendation method for the first target person, providing an incentive that is at least one of a discount for at least one of a product and a service, an accompanying coupon, and accompanying points.

6. The device according to any one of Claims 2 to 5, comprising:
an environment information acquiring section that acquires environment information indicating an environment in which the second target person is located; and
a group selecting section that selects a group to be recommended from among a plurality of groups including at least one of products and services, based on the environment information for the second target person, wherein
the recommendation determining section determines at least one of a product and a service to be recommended to the second target person, from among at least one of the products and services included in the group selected by the group selecting section, based on at least one of the plurality of attribute values for the second target person.

7. The device according to Claim 6, wherein
the group selecting section selects, with a higher priority, groups associated with stores closer to a current position of the second target person among a plurality of stores, from among the plurality of groups.

8. The device according to Claim 7, wherein
the group selecting section selects a group to be recommended from among the plurality of groups, further based on a date and time of a most recent use of each of the plurality of stores by the second target person or on a time period that has passed from the most recent use of each store by the second target person.

9. The device according to any one of Claims 6 to 8, wherein
the recommendation method determining section determines the recommendation method further based on the environment information for the second target person.

10. A method comprising:
a recommendation determining step in which a computer, for a first target person among a plurality of target people, determines whether to recommend at least one of a product and a service, based on at least one of a plurality of attribute values in an attribute database for storing the plurality of attribute values corresponding to a plurality of attributes for each of the plurality of target people;
a recommendation method determining step in which the computer determines a recommendation method for recommending at least one of a product and a service to the first target person;
a recommendation result acquiring step in which the computer acquires a recommendation result of the recommendation method for the first target person;
a recommendation result storage step in which the computer stores the recommendation result of the recommendation method in association with at least some attributes among the plurality of attributes in the attribute database; and
a recommendation model generating step in which the computer generates a recommendation model for selecting the recommendation method, using the attribute database that includes the recommendation result of the recommendation method as an attribute value of the at least some of the attributes.

11. A program executed by a computer, the program causing the computer to function as:
an attribute database connecting section connected to an attribute database for storing a plurality of attribute values corresponding to a plurality of attributes, for each of a plurality of target people;
a recommendation determining section that, for a first target person among the plurality of target people, determines whether to recommend at least one of a product and a service, based on at least one of the plurality of attribute values;
a recommendation method determining section that determines a recommendation method for recommending at least one of a product and a service to the first target person;
a recommendation result acquiring section that acquires a recommendation result of the recommendation method for the first target person;
a recommendation result storage section that stores the recommendation result of the recommendation method in association with at least some attributes among the plurality of attributes in the attribute database; and
a recommendation model generating section that generates a recommendation model for selecting the recommendation method, using the attribute database that includes the recommendation result of the recommendation method as an attribute value of the at least some of the attributes.
